(19) Europäisches Patentamt
European Patent Office
Office européen des brevets

(11) **EP 2 011 243 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**22.03.2017 Patentblatt 2017/12**

(45) Hinweis auf die Patenterteilung:
**26.08.2009 Patentblatt 2009/35**

(21) Anmeldenummer: 07724266.7

(22) Anmeldetag: **05.04.2007**

(51) Int Cl.:
***H04B 1/38*** *(2015.01)*

(86) Internationale Anmeldenummer:
**PCT/EP2007/003328**

(87) Internationale Veröffentlichungsnummer:
**WO 2007/118694 (25.10.2007 Gazette 2007/43)**

(54) **ANORDNUNG ZUR ANKOPPLUNG UND AUFNAHME EINES MOBILTELEFONS INNERHALB EINES KRAFTFAHRZEUGS**

A DEVICE FOR COUPLING AND HOUSING A MOBILE TELEPHONE IN A MOTOR VEHICLE

DISPOSITIF DE COUPLAGE ET DE RÉCEPTION D'UN TÉLÉPHONE MOBILE À L'INTÉRIEUR D'UN VÉHICULE AUTOMOBILE

(84) Benannte Vertragsstaaten:
**DE ES FR GB IT**

(30) Priorität: **12.04.2006 DE 102006017661**
**20.07.2006 DE 102006034128**

(43) Veröffentlichungstag der Anmeldung:
**07.01.2009 Patentblatt 2009/02**

(73) Patentinhaber: **Funkwerk Dabendorf GmbH**
**15806 Dabendorf (DE)**

(72) Erfinder:
• **PURSCHE, Udo**
**10243 Berlin (DE)**
• **JACOBI, Raimo**
**12557 Berlin (DE)**
• **HELDT, Ronald**
**15806 Gross Machnow (DE)**
• **FENSKE, Michael**
**14554 Seddiner See/OT Neuseddin (DE)**
• **BARTSCH, Thomas**
**15806 Zossen/OT Dabendorf (DE)**

(74) Vertreter: **Patentanwälte Bressel und Partner mbB**
**Potsdamer Platz 10**
**10785 Berlin (DE)**

(56) Entgegenhaltungen:
WO-A-99/13527          WO-A-2004/095634
DE-A1- 10 008 751       DE-A1- 10 313 625
DE-A1- 10 321 429       DE-A1- 10 360 109
DE-A1-102004 033 009   DE-U1- 9 311 242
US-B1- 6 317 089

EP 2 011 243 B2

**Beschreibung**

Die Erfindung betrifft eine Anordnung zur Ankopplung eines Mobiltelefons an Einrichtungen eines Kraftfahrzeugs und insbesondere zur Aufnahme des Mobiltelefons innerhalb des Kraftfahrzeugs. Die Erfindung betrifft ferner ein Verfahren zum Ankoppeln und Anordnen des Mobiltelefons in dem Kraftfahrzeug. Unter einem Mobiltelefon wird ein Gerät verstanden, das über eine Funkschnittstelle mit einer entfernt gelegenen Station kommunizieren kann, während es bewegt wird. Das Gerät muss nicht zwingend eine Tastatur aufweisen und nicht zwingend sowohl für den Sendebetrieb als auch den Empfangsbetrieb geeignet sein. Z. B. kann es sich bei dem Mobiltelefon um einen mobilen Notfallsender handeln, der auf Knopfdruck ein Notsignal zu der Station sendet.

Es sind bereits zahlreiche Halter bekannt, mit denen ein Mobiltelefon innerhalb eines Kraftfahrzeugs an einem gewünschten Ort gehalten werden kann. Meist sind in den Haltern Anschlüsse zum elektrischen Anschließen des Mobiltelefons an eine Freisprechanlage und/oder an eine Antenne des Kraftfahrzeugs integriert. Es ist jedoch auch bekannt, dass das Mobiltelefon über eine Bluetooth-Funkschnittstelle mit der in dem Kraftfahrzeug verbauten Freisprechanlage verbunden werden kann.

Die Halter sind jedoch in der Regel nur für eine bestimmte Bauform von Mobiltelefonen geeignet. Wenn ein anderer Typ von Mobiltelefonen gehaltert werden soll, ist in der Regel ein neuer Halter oder zumindest ein neuer Adapter erforderlich.

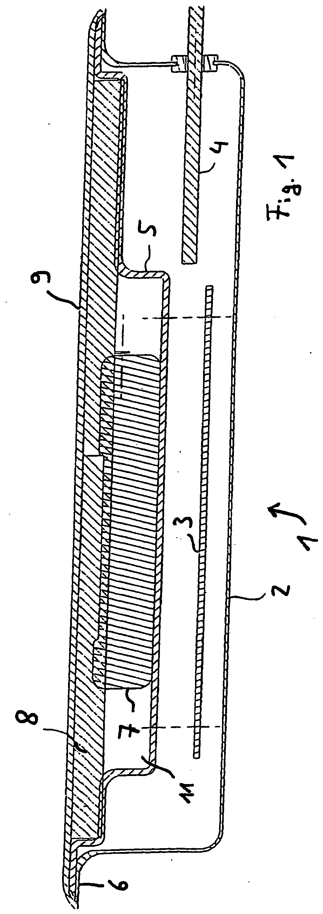

WO 2004/095634 A2 beschreibt eine Fahrzeug-Mobilfunkhalterung zur Befestigung eines Mobilfunkendgerätes in einem Fahrzeug. Die Halterung weist eine elektrische Schnittstelle zum Anschluss einer externen Antenne und eine mit der Schnittstelle elektrisch verbundene Koppelantenne zur berührungsfreien elektromagnetischen Kopplung von Hochfrequenzsignalen zwischen der Koppelantenne und der Antenne des Mobilfunkendgerätes auf (siehe Zusammenfassung). Die Halterung dient der verlustarmen elektromagnetischen Kopplung zwischen typischen internen Antennen von Mobilfunkendgeräten, die in zwei oder mehreren unterschiedlichen Frequenzbändern betrieben werden. Durch Ausgestaltung der Halterung als Abschirmung und mit reflektierenden Bauteilen wird die innerhalb eines Fahrzeugs durch ein Mobilfunkendgerät bewirkte Feldstärke reduziert (zweiter Absatz auf Seite 3). Laut dem letzten Absatz auf Seite 4 kann das Gehäuse der Halterung ein Gehäuseteil aufweisen, das das eingelegte Mobilfunkendgerät zusammen mit dem zur Aufnahme des Mobilfunkendgerätes ausgeformten Gehäuseteils zumindest teilweise umschließt und mit einer elektrisch leitfähigen Schicht beschichtet ist oder aus einem elektrisch leitfähigen Kunststoff besteht. Ferner kann laut Absatz 2 auf Seite 5 ein elektromagnetische Strahlung absorbierender Schaumstoffteil Teil der Anordnung sein. Die Halterung kann eine elektronische Schaltung 44, eine Koppelantenne 1 und ein elektrisches Anschlusselement 43 aufweisen (Figur 1). Die Koppelantenne 1 ist über eine Verbindungsleitung mit dem elektrischen Anschlusselement 43 verbunden, wobei es sich bei der elektrischen Verbindungsleitung z. B. um ein Koaxialkabel handeln kann (vierter Absatz auf Seite 9). Die elektrische Schaltung 44 erbringt die Funktion einer Freisprecheinrichtung und ist über das Anschlusselement 43 mit entsprechenden peripheren Komponenten verbunden (letzter Absatz auf Seite 9). Die Halterung weist ferner ein elektrisches Anschlusselement 42 auf, das in eine Schnittstelle des Mobilfunkendgerätes 5 eingreift, wenn das Endgerät 5 in die Halterung 4 eingeführt ist. Aus Figur 1 ist ferner eine elektrische Verbindung zwischen dem Anschlusselement 42 und der elektronischen Schaltung 44 entnehmbar.

DE 103 60 109 A1 offenbart eine Leistungsschnittstellenschaltung für eine aktive Antenne, die eine Versorgungsspannung von einem Radioempfänger an eine Antennenzuführung ankoppelt.

WO 99/13527 A1 beschreibt eine Halterung zur Montage in einem Fahrzeug und zur Unterstützung eines Dual-Frequency Mobiltelefons. Ein erstes parasitäres Kopplerelement ist mit einem speisenden Kopplerelement ausgerichtet und mit der Grundplatte verbunden. Es koppelt elektromagnetisch Signale mit einer ersten Frequenz zu und von der Antenne des Mobiltelefons. Die Elemente halten zusammen die Antenne des Telefons. Ferner ist ein zweites parasitäres Element vorgesehen, um Signale zu und von der Antenne mit einer zweiten Frequenz elektromagnetisch zu koppeln.

DE 10 2004 033 009 A1 offenbart ein Fahrzeuggerät mit einer im Fahrzeuginneren angebrachten oder anbringbaren Fahrzeugbox, die eine Antenne für die drahtlose Kommunikation mit einer externen Erfassungseinrichtung aufweist, wobei die Fahrzeugbox in eine Halterung einsetzbar ist, die eine an eine Außenantenne des Fahrzeugs anschließbar oder angeschlossene Innenantenne aufweist, die bei in die Halterung eingesetzter Fahrzeugbox kontaktlos mit der Antenne der Fahrzeugbox gekoppelt ist.

"DE 103 21 429 A1 beschreibt einen Antennen-Koppler für ein Mobilfunkendgerät und eine Halterung für das Gerät. Der Koppler kann an eine externe Kfz-Antenne angeschlossen werden. Eine Koppelstruktur des Kopplers koppelt HF-Signale der Antenne des in der Nähe befindlichen Mobilfunkgeräts elektromagnetisch. Neben der rein mechanischen Aufnahme kann die Halterung zur Fixierung des Mobilfunkgeräts einen Magneten, einen Haltebügel oder ein mechanisches Klemmelement aufweisen. Die Abmessung und Gestalt des Kopplers kann abhängig von verwendeten Frequenzbändern, von der Gestaltung der Antenne des Geräts und von weiteren Design-Vorgaben und Bedingungen der Halterung verändert werden. Bei dem Gerät kann es sich um Mobilfunkgeräte verschiedener Hersteller handeln. Die Halterung und der Koppler können mit einer Vielzahl unterschiedlicher Mobilfunkendgeräte verwendet werden."

Es ist eine Aufgabe der vorliegenden Erfindung, eine Anordnung anzugeben, die für die Aufnahme einer Vielzahl von unterschiedlichen Mobiltelefontypen geeignet ist. Bevorzugtermaßen soll außerdem der Innenraum des Kraftfahrzeugs gegen Funksignale abgeschirmt werden, die das Mobiltelefon aussendet. Die beigefügten Patentansprüche definieren den Schutzumfang.

Einem Aspekt der Erfindung liegt der Gedanke zugrunde, dass das Mobiltelefon drahtlos an eine Antennenstruktur des Kraftfahrzeugs angekoppelt ist. Die Antennenstruktur kann (z. B. über ein Koaxialkabel) mit einer Außenantenne des Kraftfahrzeugs verbunden sein bzw. werden. Auf diese Weise können Funksignale, die von dem Mobiltelefon ausgesendet werden von der Antennenstruktur im Innern des Kraftfahrzeugs empfangen werden, über die Verbindung zu der Außenantenne des Kraftfahrzeugs gelangen und von dieser ausgesendet werden. Dabei ist es optional außerdem möglich, dass die Signale nach ihrem Empfang von der Antennenstruktur, aber vor dem Aussenden über die Außenantenne verändert und/oder verarbeitet werden. Insbesondere können dabei den auszusendenden Informationen Zusatzinformationen hinzugefügt werden und/oder kann auf ein anderes Datenformat und/oder Übertragungsprotokoll übergegangen werden. Umgekehrt ermöglicht die Ankopplung des Mobiltelefons an die Antennenstruktur einen Empfang von Signalen, die zunächst von der Außenantenne empfangen werden, über die Verbindung zwischen der Außenantenne und der Antennenstruktur zu der Antennenstruktur übertragen werden und drahtlos von der Antennenstruktur zu der Empfangsantenne des Mobiltelefons übertragen werden, wobei die Sende-und Empfangsantenne des Mobiltelefons auch eine einzige Antenne sein kann. In entsprechender Weise, wie für Sendesignale beschrieben, kann nach dem Empfang der Empfangssignale von der Außenantenne, aber vor der Übertragung von der Antennenstruktur zu der Empfangsantenne des Mobiltelefons eine Verarbeitung und/oder Veränderung der in den Empfangssignalen enthaltenen Information durchgeführt werden.

Bevorzugtermaßen ist eine Einrichtung vorgesehen, die den örtlichen Bereich in dem sich das Mobiltelefon beim Betrieb über die Antennenstruktur befinden kann, beschränkt. Im Fall einer Standard-Halterung (Cradle) für ein Mobiltelefon kann eine einzige feste Position definiert sein, in der sich das Mobiltelefon befindet, wenn es von dem Halter gehalten wird. Dabei kann dieselbe Halterung dazu geeignet sein, verschiedene Mobiltelefontypen zu halten und können die Positionen, die die verschiedenen Mobiltelefontypen in der Halteposition einnehmen, von Typ zu Typ variieren.

Gemäß der Erfindung ist es aber auch möglich, dass eine Halterung denselben Mobiltelefontyp in verschiedenen Positionen und/oder (innerhalb eines bestimmten örtlichen Bereichs) in beliebigen Positionen halten kann. Dabei ist die Antennenstruktur so relativ zu der Halterung angeordnet, dass in jeder möglichen Halteposition (dies schließt auch verschiedene Drehstellungen, d. h. Orientierungen des Mobiltelefons mit ein) zwischen der oder den Antennen des Mobiltelefons und der Antennenstruktur eine drahtlose Signalübertragung stattfinden kann.

Dabei befindet sich die Antenne des Mobiltelefons bzw. befinden sich die Antennen des Mobiltelefons vorzugsweise im Nahfeld der Antennenstruktur und/oder befindet sich die Antennenstruktur im Nahfeld der Antenne bzw. der Antennen des Mobiltelefons. Der Abstand zwischen der Antenne bzw. den Antennen des Mobiltelefons und der Antennenstruktur beträgt daher z. B. höchstens 15 cm, insbesondere höchstens 10 cm, vorzugsweise höchstens 5 cm. Dadurch können geringe Kopplungsverluste bei der Ankopplung des Mobiltelefons an die Antennenstruktur erreicht werden.

Unter einer Halterung für ein Mobiltelefon wird z. B. auch das im Folgenden noch beschriebene Gehäuse mit Fixierungselement verstanden. Ferner wird unter einer Halterung auch verstanden, dass die Halterung lediglich die Bewegungsmöglichkeiten des Mobiltelefons einschränkt, das Mobiltelefon aber nicht in einer unverrückbaren Position festhält. Die Halterung kann also z. B. eine mit Polstermaterial ausgekleidete Schale aufweisen, in die das Mobiltelefon hineingelegt wird und sich dann vorzugsweise im Nahfeld der Antennenstruktur befindet.

Die Antennenstruktur und die Halterung können eine gemeinsame bautechnische Einheit bilden oder Teil einer gemeinsamen bautechnischen Einheit sein. Unter einer bautechnischen Einheit wird verstanden, dass die Teile der Einheit miteinander mechanisch verbunden sind und daher in einem einzigen Arbeitsvorgang in dem Kraftfahrzeug verbaut werden können.

Es ist jedoch auch möglich, die Antennenstruktur und die Halterung als separate, nicht miteinander mechanisch verbundene Teile im Kraftfahrzeug zu verbauen, so dass sie erst durch den Einbau mechanisch miteinander verbunden werden. Z. B. kann die Halterung in einem vordefinierten Bereich an der zum Innenraum des Kraftfahrzeugs weisenden Oberfläche einer Frontseite des Innenraums verbaut werden. Dabei kann z. B. zwischen verschiedenen Halterungen gewählt werden, die jeweils für einen oder mehrere bestimmte Mobiltelefontypen konzipiert sind. Die Antennenstruktur aber kann an einer gegenüberliegenden Seite der Oberfläche (d. h. der Wand) des Fahrzeug-Innenraums verbaut sein und unabhängig davon, welche Halterung im Fahrzeug-Innenraum angeordnet wird, zur Kopplung mit der oder den Antennen des Mobiltelefons vorgesehen sein und im Betrieb auch funktionieren. Z. B. ist die Antennenstruktur an der Seite eines so genannten Armaturenbretts montiert, die zum Motorraum eines Straßenkraftfahrzeugs mit Frontmotor weist. Die Antennenstruktur ist daher vom Fahrzeug-Innenraum nicht sichtbar. In dem dafür vorgesehenen Bereich im Fahrzeug-Innenraum, der an derselben Stelle des Armaturenbretts liegt, an der auch die Antennenstruktur montiert ist, jedoch durch das Material des Armaturenbretts von der Antennenstruktur getrennt ist, kann dann eine geeignete Halterung für ein bestimmtes Mobiltelefon, für mehrere bestimmte Mobiltelefontypen oder ein Universalhalter für nahezu beliebige Mobiltelefontypen montiert werden. Dabei befinden sich die Antennen des Mobiltelefons und der Antennenstruktur wie oben beschrieben vorzugsweise im Nahfeld, wenn das jeweilige Mobiltelefon von der Halterung gehalten wird.

Ein wesentlicher Vorteil dieser Vorgehensweise besteht darin, dass eine verhältnismäßig kostengünstig herzustellende Antennenstruktur fest im Kraftfahrzeug verbaut werden kann, es dem jeweiligen Inhaber des Fahrzeugs aber überlassen bleiben kann, ob und welches Mobiltelefon er an die Antennenstruktur ankoppeln möchte. Der Aufwand für die nachträgliche Montage des Halters ist verhältnismäßig gering. Insbesondere kann die Antennenstruktur bereits von vornherein mit der Außenantenne des Kraftfahrzeugs galvanisch verbunden sein, etwa über ein Koaxialkabel.

Es ist in diesem Fall sogar möglich, dass die Halterung des Mobiltelefons und/oder das Mobiltelefon beim Betrieb innerhalb des Kraftfahrzeugs keinerlei galvanische Verbindung zu anderen Einrichtungen des Kraftfahrzeugs aufweisen. Die zum Betrieb des Mobiltelefons erforderliche Signalübertragung kann allein über die Antennenstruktur erfolgen, oder über eine Mehrzahl von Antennenstrukturen. Dabei können nicht nur, wie an anderer Stelle dieser Beschreibung noch näher beschrieben wird, die eigentlichen Sende- und/oder Empfangssignale des Mobiltelefons drahtlos übertragen werden, sondern auch Steuersignale und/oder Signale, die zur Ankopplung des Mobiltelefons an eine Freisprecheinrichtung des Kraftfahrzeugs übertragen werden, also z. B. Signale eines Mikrofons und/oder Lautsprechers, der bzw. die im Kraftfahrzeug verbaut sind.

Aus der DE 103 13 625 A1 ist eine Aufnahmevorrichtung für ein Mobilfunkgerät bekannt mit Haltemitteln zum Fixieren des Mobilfunkgeräts mit einer vorbestimmten Halteposition und einer Koppelantenne die derart ausgebildet und angeordnet ist, dass bei in der Halteposition befindlichem Mobilfunkgerät eine drahtlose Kopplung zwischen einer Mobilgeräteantenne des Mobilfunkgeräts und der Koppelantenne vorliegt. Zum Schutz vor gesundheitlichen Risiken von in der Nähe der Aufnahmevorrichtung befindlichen Personen wird die Übertragungsleistung der drahtlosen Kopplung gering gehalten und ist außerdem ein Verstärkerelement vorgesehen, das Signale in einer Übertragungsleitung zu einer externen Antenne eines Kraftfahrzeugs verstärkt.

Es ist eine Aufgabe eines im Folgenden beschriebenen Aspekts der Erfindung, der für sich allein realisiert werden kann oder in beliebiger Kombination mit den anderen in dieser Beschreibung beschriebenen Aspekten realisiert werden kann, eine Anordnung zur Ankopplung einer Mobiltelefonantenne an Einrichtungen eines Kraftfahrzeugs anzugeben, die Möglichkeiten, das Mobiltelefon zu nutzen, erweitern.

Es wird vorgeschlagen, die Antennenstruktur zum drahtlosen Übertragen von Signalen zu und/oder von der Sende- und/oder Empfangsantenne des Mobiltelefons so auszugestalten, dass die Antennenstruktur breitbandig ist. Insbesondere ist die Antennenstruktur ausgestaltet, die Signale in einem Frequenzbereich zu senden und/oder zu empfangen, der die Frequenzbänder von zumindest zwei verschiedenen Mobilfunknetzen und/oder zumindest einem Mobilfunknetz und einem weiteren Frequenzband enthält. Bei den Frequenzbändern handelt es sich also z. B. um die Frequenzbänder von zwei verschiedenen GSM-Netzen, einem GSM-Netz und einem UMTS-Netz, zwei oder mehr UMTS-Netzen oder einem Mobilfunknetz und dem Frequenzband gemäß Bluetooth-Standard.

Die Antennenstruktur (bei der es sich auch um eine örtlich verteilte Antennenstruktur handeln kann) hat vorzugsweise die Eigenschaften, die im Folgenden beschrieben werden.

Bevorzugt wird, dass die Abmessungen (insbesondere die Länge und/oder Breite) von elektrisch leitfähigen Bereichen (d.h. Antennen), die die Antennenstruktur bilden, in der Größenordnung von 10 cm liegen. Dies heißt, dass bei verschiedenen Ausführungsformen der Antennenstruktur die Länge und/oder Breite z. B. bis zu 1 cm klein und/oder z. B. bis zu 1 m groß sein kann. Die Frequenzen, mit denen die Funksignale innerhalb eines Mobiltelefonnetzes übertragen werden, liegen heutzutage üblicherweise im Bereich von ca. 450 MHz (GSM, Global System for Mobile Communication, in Tansania) bis 2200 MHz (UMTS, Universal Mobile Telecommunications System). Für zukünftige Mobilfunknetze (z. B. WLAN-Netze) sind auch höhere Signalfrequenzen möglich. Die Übertragungsfrequenzen für Signale gemäß Bluetooth-Standard liegen im Bereich von 2400 bis 2500 MHz.

Die bevorzugte Ausführungsform der Antennenstruktur soll für den Empfang und/oder das Senden in mehreren, vorzugsweise in allen Frequenzbändern der genannten Systeme geeignet sein, zumindest im Frequenzbereich von 850 MHz bis 2500 MHz. Damit ist es möglich, nicht nur die Signale zum Betreiben des Mobiltelefons in einem Mobilfunknetz zu übertragen sondern außerdem noch Signale zum Betrieb in einem anderen Mobilfunknetz und/oder gemäß Bluetooth-Standard zu übertragen. Gemäß Bluetooth-Standard können zum Beispiel Steuersignale zur Steuerung des Betriebes des Mobiltelefons (z. B. Wählen einer Teilnehmernummer durch Sprachsignale oder Bedienung einer Tastatur an anderer Stelle als am Mobiltelefon) und/oder Signale im Freisprech-Betrieb übertragen werden.

Die Antennenstruktur ist vorzugsweise so ausgestaltet, dass sie Frequenzsignale in einem Frequenzband breitbandig senden und/oder empfangen kann. Es ist auch möglich, dass die Antennenstruktur mehrere Frequenzbänder aufweist, in denen sie breitbandig senden und/oder empfangen kann, wobei die Frequenzbereiche voneinander getrennt sein können oder einander überlappen können. Jedes Frequenzband oder der gesamte Frequenzbereich werden durch eine obere Grenzfrequenz und eine untere Grenzfrequenz begrenzt. Unter breitbandig wird verstanden, dass innerhalb des Frequenzbereichs zwischen der oberen Grenzfrequenz fo und der unteren Grenzfrequenz fu der Welligkeitsfaktor s oder das Stehwellenverhältnis VSWR, das aus den Amplituden der Wellen bestimmt wird, die aus der Antennen-Versorgungsleitung hin zur Antenne laufen (Amplitude Uh) und aus der Antenne in die Antennen-Versorgungsleitung zurücklaufen (Amplitude Ur), bezogen auf eine Oktave den Faktor 2 nicht überschreitet, d.h.

$$VSWR <= 2 \ falls \ fo/fu = 2,$$

wobei

$$VSWR = s = (Uh + Ur) / (Uh - Ur)$$

Bevorzugt wird daher, dass die Antennenstruktur in diesem Sinne breitbandig für den Empfang und/oder das Senden von Signalen in den zuvor genannten Frequenzbereichen des GSM, des UMTS ein zukünftiges WLAN-Mobilfunknetz und/oder für Bluetooth ist.

Die Antennenstruktur kann eine beliebige breitbandige Antennenstruktur sein, die aus der Antennentechnik bekannt oder noch unbekannt ist. Insbesondere kann die Antennenstruktur

- selbstähnlich sein,
- selbstkomplementär sein,
- eine Form aufweisen, die bei einer Maßstabsänderung unverändert bleibt, und/oder
- mehrere Resonanzelemente aufweisen, wobei sich die Abmessungen der Resonanzelemente zueinander wie die Elemente einer geometrischen Reihe verhalten.

Eine Antennenstruktur ist selbstähnlich, wenn sich elektrisch leitfähige und/oder nicht leitfähigen Bereiche der Antennenstruktur einander in ihrer Form (nicht aber zwingend auch in ihrer Größe) ähneln oder gleichen. Selbst ähnliche Strukturen können Fraktale sein. Fraktale sind insbesondere aus der Chaostheorie bekannt.
Z. B. weist die Antennenstruktur eine Vielzahl von verschiedenen örtlichen Gebieten auf, in denen elektrisch leitfähigen Bereiche gleicher Form wie in den anderen Gebieten angeordnet sind.

Eine Antennenstruktur ist selbstkomplementär, wenn Größe und Form von elektrisch leitfähigen Bereichen der Antennenstruktur gleich der Größe und Form von elektrisch nicht leitfähigen Bereichen im örtlichen Gebiet (bei zweidimensionalen Strukturen in der Fläche) der Antennenstruktur sind. Ein Beispiel ist eine zweidimensionale Antennenstruktur, bei der von einem Zentrum der Antennenstruktur Grenzlinien zwischen elektrisch leitfähigen und nicht leitfähigen Bereichen der Struktur linear, d.h. strahlenförmig ausgehen, wobei die so gebildeten (im Bereich des Zentrums) dreieckförmigen elektrisch leitfähigen und nicht leitfähigen Bereiche gleich groß sind, also insbesondere gleich große Winkelbereiche einnehmen.

Eine Antennenstruktur weist eine Form auf, die bei einer Maßstabsänderung unverändert bleibt, wenn für verschiedene Signalfrequenzen (für die die Antennenstruktur breitbandig ist) jeweils Strukturelemente der Antennenstruktur vorhanden sind, die normiert auf die Signalfrequenz gleich groß sind. Ein Beispiel ist eine spiralförmige Antenne. Ein nahe dem Zentrum der Spirale liegender Bereich der Antennenstruktur ist bezogen auf eine kleine Signalfrequenz genauso groß und gleich geformt wie ein weiter außen gelegener Bereich der spiralförmigen Antennenstruktur für eine größere Signalfrequenz.

Z. B. können die elektrisch leitfähigen Bereiche der Antennenstruktur sich in einer Ebene entlang einer Oberfläche eines plattenförmige Trägers erstrecken, sodass die Antennenstruktur im Wesentlichen für den Empfang und/oder das Senden von Signalen in Richtungen quer zu der Oberfläche geeignet ist. Der Träger kann z. B. eine aus der Elektrotechnik bekannte Platine sein, an deren Oberfläche mit an sich bekannten Strukturierungstechniken die gewünschten elektrisch leitfähigen Bereiche der Antennenstruktur erzeugt werden. Der elektrische Anschluss an die Antennen-Zuleitung kann dann vorteilhafter Weise auf der Rückseite der Platine bzw. des Trägers erfolgen.

Ein Beispiel für den Fall, dass sich Abmessungen der Resonanzelemente (d. h. der Strukturelemente eine Antennenstruktur) zueinander wie die Elemente einer geometrischen Reihe verhalten, wird im Folgenden gegeben: Besitzt ein Resonanzelement z. B. die Länge L0, so ist das nächst kleinere t × L0 lang, das dritte t × 2L0 lang usw., wobei t auch der Stufenfaktor genannt wird:

$$Ln = L0 \ x \ t^n,$$

wobei n eine natürliche Zahl ist.

Einer bevorzugten Ausgestaltung einer Halterung für Mobiltelefone liegt der Gedanke zugrunde, dass ein elektromagnetisch abschirmendes Gehäuse, welches beispielsweise fest im Innenraum des Kraftfahrzeugs verbaut ist, Mobiltelefone mit unterschiedlichen Außenabmessungen aufnehmen können soll, wobei die Handhabung der Vorgänge des Einbringens des Mobiltelefons in das Gehäuse und des Herausnehmens des Mobiltelefons aus dem Gehäuse für den Benutzer möglichst einfach ausgestaltet sein sollen. Dabei kann auch eine Antennenstruktur zur drahtlosen Übertragung der Signale zwischen der Mobiltelefonantenne und Einrichtungen des Fahrzeugs eingesetzt werden. Es ist jedoch auch möglich, das Mobiltelefon auf andere Weise mit den Einrichtungen zu koppeln, z. B über eine Steckverbindung an dem Mobiltelefon.

Eine Öffnung, die das Gehäuse zwangsläufig zum Einbringen und Herausnehmen des Mobiltelefons haben muss, kann zumindest teilweise durch ein elastisch verformbares Element verschlossen werden. Dabei ist das elastisch verformbare Element einerseits als Fixierungselement ausgestaltet, welches das Mobiltelefon in dem geschlossenen Zustand der Öffnung bzw. in dem geschlossenen Zustand des Gehäuses mechanisch in einer momentanen Position fixiert. Andererseits ist das Fixierungselement elektromagnetisch absorbierend ausgestaltet.

Unter elektromagnetisch absorbierend und/oder elektromagnetisch abschirmend wird in dieser Beschreibung verstanden, dass elektromagnetische Wellen, die durch das Fixierungselement bzw. durch Gehäuseteile hindurchtreten möchten, in ihrer Amplitude signifikant gedämpft werden. In besonderer Ausgestaltung ist die elektromagnetische Abschirmung speziell für ein oder mehrere der Frequenzbänder ausgelegt, in denen Mobiltelefone ihre Funksignale senden und/oder empfangen. Dabei kann es sich um die Frequenzbänder handeln, die innerhalb eines Mobiltelefonnetzes genutzt werden, und/oder um die Frequenzbänder für eine zusätzliche Funkschnittstelle, beispielsweise nach dem Bluetooth-Standard.

Dadurch, dass ein elastisch verformbares Fixierungselement (oder auch eine Mehrzahl davon) verwendet wird, braucht das Mobiltelefon nicht an einer bestimmten, vordefinierten Position innerhalb des Gehäuses angeordnet zu werden. Vielmehr kann das Mobiltelefon in beliebiger Weise in das Gehäuse eingebracht werden und kann das Fixierungselement dazu verwendet werden, das Mobiltelefon in der beliebigen Position, die es gerade einnimmt, zu fixieren.

Optional sind auch andere Teile des Gehäuses speziell dazu ausgestaltet, das Mobiltelefon in seiner beliebigen, momentanen Position zu fixieren, zumindest wenn auch das zumindest eine Fixierungselement an dem Mobiltelefon anliegt und dieses festhält. Zum Beispiel kann das Gehäuse ganz oder teilweise mit Materialien ausgekleidet werden, die ein Verrutschen des Mobiltelefons verhindern oder zumindest erschweren. In einer konkreten Ausgestaltung ist zumindest ein Teil des Gehäuses innen mit einem Schaumstoffmaterial versehen, auf das das Mobiltelefon aufgelegt werden kann und/oder an das das Mobiltelefon angedrückt werden kann, so dass in der fixierten Position der Schaumstoff durch das Mobiltelefon elastisch verformt wird. Die elastischen Gegenkräfte fixieren dann das Mobiltelefon oder erschweren zumindest eine Veränderung der momentanen Position des Mobiltelefons. Auch wirkt der Schaumstoff dämpfend für Stöße, die von dem Gehäuse auf das Mobiltelefon einwirken.

Bevorzugt wird, dass auch das Fixierungselement einen Schaumstoff aufweist, in dem bevorzugt ein Stoff oder Stoffgemisch verteilt ist, der bzw. das elektromagnetisch absorbierende Eigenschaften hat.

Außerdem weist die Anordnung mit dem Gehäuse zumindest einen Anschluss zum Übertragen eines Antennensignals von einer Antenne des Kraftfahrzeugs zu dem Mobiltelefon und/oder umgekehrt auf. Auf diese Weise kann das Mobiltelefon über die Fahrzeugantenne betrieben werden, während es in dem Gehäuse angeordnet ist.

Vorzugsweise sind weitere Schnittstellen zwischen dem Mobiltelefon und Einrichtungen des Kraftfahrzeugs vorhanden, z. B. eine Bluetooth-Schnittstelle, damit das Mobiltelefon z. B. an eine Freisprecheinrichtung des Kraftfahrzeuges angeschlossen werden kann.

Der Anschluss zum Übertragen des Antennensignals ist bei einer bevorzugten Ausgestaltung über eine elektrische Leitung (z. B. ein Koaxialkabel) mit einer Antennenstruktur im Inneren des Gehäuses verbunden. Die Antennenstruktur ermöglicht es, die zwischen ihr und dem Mobiltelefon auszutauschenden Antennensignale drahtlos zu übertragen. Damit entfällt ein mechanisch-elektrischer Anschluss des Mobiltelefons an den Antennenanschluss der Anordnung. Der Benutzer braucht dann beispielsweise keinen Antennenstecker, der dem Gehäuse zugeordnet ist, mit dem Mobiltelefon zu verbinden, wenn er das Mobiltelefon in das Gehäuse einbringt.

Unter einer Fixierung des Mobiltelefons in einer momentanen Position wird insbesondere verstanden, dass das Fixierungselement bei der Fixierung an dem Mobiltelefon anliegt und dabei elastisch verformt wird, so dass die Gegenkraft, die der elastischen Verformung entgegenwirkt auf das Mobiltelefon einwirkt, so dass das Mobiltelefon fixiert wird. Unter Fixierung ist jedoch nicht zwangsläufig eine starre Fixierung zu verstehen. Vielmehr kann z. B. aufgrund äußerer Kräfte trotz der Fixierung eine Bewegung des Mobiltelefons aus seiner momentanen Position heraus stattfinden. Insbesondere kann z. B. beim Bremsen des Kraftfahrzeugs das Mobiltelefon aufgrund seiner Trägheit temporär oder dauerhaft verschoben werden. Vorzugsweise ist die Verschiebung jedoch nur temporär und durch das Fixierungselement und/oder durch andere elastische Komponenten der Anordnung abgefedert.

Gemäß einem weiteren Aspekt, der in dieser Beschreibung beschrieben werden soll, weist eine Anordnung eine Halterung zum Halten des Mobiltelefons in einer momentanen Position auf. Dabei kann die Halterung Teil eines Gehäuses sein, in dem das Mobiltelefon gehalten werden soll oder kann auch außerhalb eines Gehäuses angeordnet sein. Es kann eine Ankopplung der Mobiltelefonantenne an Einrichtungen eines Kraftfahrzeugs vorgesehen sein.

Unter "Halten" kann auch ein Beitrag zur Fixierung des Mobiltelefons in einer momentanen Position verstanden werden. Insgesamt kann das Mobiltelefon beispielsweise dadurch fixiert werden, dass es von der Halterung gehalten und zusätzlich von dem oben beschriebenen Fixierungselement fixiert wird.

Vorzugsweise ist die Halterung ausgestaltet, das Mobiltelefon formschlüssig und/oder kraftschlüssig zu halten. Insbesondere kann die Halterung ausgestaltet sein, alternativ ein anderes Mobiltelefon mit anderen Außenabmessungen formschlüssig und/oder kraftschlüssig zu halten. Z. B. kann durch die Ausgestaltung der Halterung eine Mehrzahl von unterschiedlichen Positionen definiert sein, in denen jeweils eines von mehreren Mobiltelefonen mit unterschiedlichen Außenabmessungen formschlüssig und/oder kraftschlüssig von der Halterung gehalten wird. Dabei ist es bei einer konkreten Ausgestaltung der Halterung lediglich möglich, eines der mehreren Mobiltelefone mit unterschiedlichen Außenabmessungen zu halten.

Der Begriff "unterschiedliche Positionen" schließt auch den Fall mit ein, dass im Vergleich einer ersten Position mit einer zweiten Position lediglich die Ausrichtung der jeweils gehaltenen Mobiltelefone unterscheidet.

Auf diese Weise können z. B. unterschiedliche Mobiltelefone wahlweise in ein Gehäuse eingebracht werden und über den Anschluss zum Übertragen des Antennensignals an die Antenne des Kraftfahrzeugs angeschlossen werden, zum Beispiel ein PDA (Personal Digital Assistent) und wahlweise ein Standard-Mobiltelefon mit kleinen Außenabmessungen.

Ein Benutzer kann daher jeweils eine der unterschiedlichen Positionen auswählen, die für das zu haltende Mobiltelefon besonders gut geeignet ist. Versuche habe gezeigt, dass Benutzer sehr schnell lernen, welche Position für ein bestimmtes Mobiltelefon am besten geeignet ist und sich auch gut an diese Position erinnern können.

Gemäß Anspruch 1 weist die Halterung einen wannenförmigen Aufnahmeraum zur Aufnahme des Mobiltelefons auf, der von einem Boden und einer in sich geschlossen umlaufenden seitlichen Randfläche begrenzt ist. Ein solcher wannenförmiger Aufnahmeraum kann auf unterschiedliche Weise so gestaltet sein, dass er die unterschiedlichen Positionen für Mobiltelefone mit unterschiedlichen Abmessungen bereitstellt.

Insbesondere kann die Randfläche eine Mehrzahl von Vorsprüngen aufweisen, die zum Beispiel von einem elastischen Material gebildet werden. Diese Vorsprünge allein ermöglichen eine Mehrzahl der unterschiedlichen Positionen. Beispielsweise kann ein Mobiltelefon so in den wannenförmigen Aufnahmeraum eingebracht werden, dass es entweder auf der einen oder anderen Seite eines der Vorsprünge anliegt und/oder zwischen beliebigen Paaren der Vorsprünge oder zwischen beliebigen Kombinationen der Vorsprünge angeordnet ist und zumindest von diesen Vorsprüngen gehalten wird, das heißt an diesen Vorsprüngen anliegt.

Alternativ oder zusätzlich kann die Randfläche eine oder mehrere Aussparungen und/oder Vertiefungen aufweisen.

Unter einem Vorsprung, einer Vertiefung und einer Aussparung wird jeweils ein Bereich (entweder ein Materialbereich oder ein materialfreier Bereich) verstanden, der einen kontinuierlichen Verlauf der Randfläche unterbricht. Bei dem kontinuierlichen Verlauf der Randfläche kann es sich um einen geradlinigen Verlauf oder um einen kontinuierlichen gekrümmten Verlauf handeln. Unter "Verlauf" ist insbesondere der Verlauf der Randfläche um den Aufnahmeraum herum zu verstehen.

Vorzugsweise wird die Randfläche und/oder der Boden von einem elastischen Material gebildet. Gut geeignet ist insbesondere ein thermoplastisches Elastomer (TPE). Bei dem Material, das den Boden und die Randfläche und optional auch die Vorsprünge bildet, kann es sich um ein einziges Stück Material handeln, das beispielsweise als Formstück unter Verwendung einer Negativform hergestellt wurde.

Bei einer bevorzugten Ausführungsform weist die Randfläche entlang ihrem Verlauf um den Aufnahmeraum zumindest einen konkaven Abschnitt und einen konvexen Abschnitt auf. Unter einem konvexen Abschnitt wird ein Abschnitt verstanden, an dem der Aufnahmeraum nach außen gewölbt ist, während an einem konkaven Abschnitt der Aufnahmeraum nach innen "verkleinert" ist im Vergleich zu dem Fall, dass die Randfläche in dem Abschnitt durchgehend gerade verläuft.

Unter einer Wölbung wird jedoch auch verstanden, dass der Abschnitt der Randfläche einen oder mehrere Ecken aufweist, an der bzw. an denen die Randfläche entlang ihrem Verlauf um den Aufnahmeraum herum abknickt. Einem konvexen Abschnitt entspricht beispielsweise ein Verlauf mit einer Außenecke, bei der der im Aufnahmeraum gemessene Innenwinkel der Ecke zwischen 0 und 180° liegt. Einem konkaven Abschnitt entspricht beispielsweise eine Innenecke, an der der im Aufnahmeraum gemessene Innenwinkel größer als 180° ist.

Der zuvor beschriebenen Ausführungsform mit zumindest einem konkaven und einem konvexen Abschnitt entspricht beispielsweise daher ein Verlauf der Randfläche um den Aufnahmeraum mit zumindest einer Innenecke, an der das Material, das die Randfläche bildet, in den Aufnahmeraum hineinragt.

Vorzugsweise verläuft die Randfläche in dem zumindest einen konvexen Abschnitt entlang einer Spirallinie um einen imaginären Zentralpunkt innerhalb des Aufnahmeraums. Unter einer Spirallinie wird eine Linie verstanden, die in Bezug auf den Zentrumspunkt in ihrem Verlauf kontinuierlich ihren Radius zu dem Zentrumspunkt vergrößert und dabei gleichzeitig kontinuierlich den Drehwinkel um den Zentrumspunkt entweder vergrößert oder (Spirale im Gegenuhrzeigersinn) oder verkleinert (Spirale um Uhrzeigersinn). Unter einem Verlauf der Randfläche entlang einer Spirallinie wird jedoch auch verstanden, dass die Randfläche der Spirallinie nicht exakt folgt, sondern diese beispielsweise mehrfach schneidet. Auf ein derartiges Ausführungsbeispiel, in dem die Randfläche geradlinig verlaufende Abschnitte mit Außenecken aufweist, wird noch näher eingegangen.

Zur Erfindung gehört ferner ein Verfahren zum Anordnen eines Mobiltelefons in einen elektromagnetisch abgeschirmten Raum innerhalb eines Kraftfahrzeugs.

Bevorzugte Ausführungsformen und weitere Merkmale, die optional zusätzlich zu den bereits genannten Merkmalen vorhanden sein können, werden nun unter Bezugnahme auf die beigefügte Zeichnung beschrieben. Die einzelnen Figuren der Zeichnung zeigen:

Fig. 1    einen vertikalen Längsschnitt durch ein Gehäuse mit einem darin angeordneten Mobiltelefon,

Fig. 2    einen vertikalen Querschnitt durch die Anordnung gemäß Fig. 1,

Fig. 3    eine Ansicht von oben auf einen wannenförmigen Aufnahmeraum zur wahlweisen Aufnahme von Mobiltelefonen mit unterschiedlichen Abmessungen,

Fig. 4    einen Querschnitt entlang der Linie x-x in Fig. 3,

Fig. 5    schematisch einen vergrößert dargestellten Bereich in einem Kraftfahrzeug mit einer Anordnung zur Ankopplung eines Mobiltelefons an Einrichtungen des Kraftfahrzeugs,

Fig. 6    schematisch einen vergrößert dargestellten Bereich in einem Kraftfahrzeug mit einer anderen Anordnung zur Ankopplung eines Mobiltelefons an Einrichtungen des Kraftfahrzeugs,

Fig. 7    eine Draufsicht auf einer Vorderseite eines Trägers, der eine Antennenstruktur trägt,

Fig. 8    einen Ausschnitt der in Fig. 7 dargestellten Antennenstruktur im Zentrum der Struktur,

Fig. 9    schematisch eine weitere Anordnung zur Ankopplung eines Mobiltelefons an Einrichtungen des Kraftfahrzeugs,

Fig. 10    eine erste Anordnung von Frequenzfiltern und Einrichtungen einer Halterung für ein Mobiltelefon,

Fig. 11    eine zweite Anordnung von Frequenzfiltern und Einrichtungen für eine Mobiltelefon-Halterung und

Fig. 12    eine Gesamt-Anordnung von Einrichtungen in einem Kraftfahrzeug mit einer dritten Anordnung von Filtereinrichtungen und anderen Einrichtungen einer Mobiltelefon-Halterung.

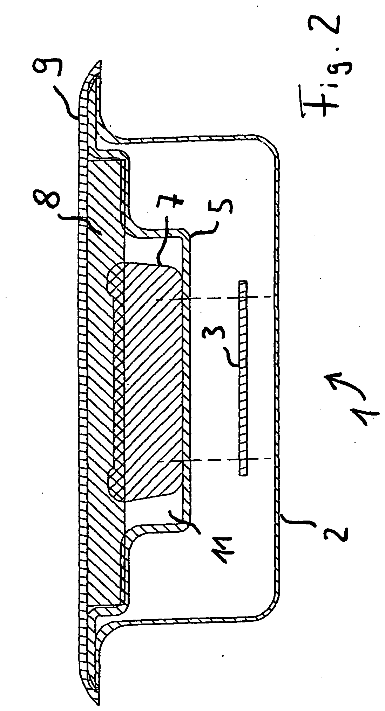

Wie in den Figuren 1 und 2 gezeigt, kann bei einer Ausgestaltung der erfindungsgemäßen Anordnung ein Gehäuse 1 vorgesehen sein, das ein Unterteil 2 und einen Deckel 9 aufweist. Das Unterteil 2 umgibt einen Innenraum des Gehäuses 1 an allen Seiten mit Ausnahme der oberen Seite. Das Unterteil 2 ist im Wesentlichen quaderförmig ausgestaltet, weist jedoch abgerundete Ecken auf und bildet einen oberen Rand 6 zur Auflage eines wannenförmigen Einsatzteils 5. Das Unterteil 2 ist z. B. aus Metall gefertigt (und kann optional mit Massepotenzial des Kraftfahrzeugs verbunden werden), so dass es elektromagnetische Wellen, die durch das Unterteil 2 hindurchtreten, dämpft und/oder so dass elektromagnetische Wellen durch das Unterteil 2 nicht hindurch treten können. In beiden Fällen wird eine Abschirmwirkung erzielt.

Der wannenförmige Einsatz 5 definiert im Innern des Gehäuses 1 einen Teil-Innenraum 11, der groß genug ist, um jeweils ein Mobiltelefon darin anzuordnen, wobei das Mobiltelefon aus einer großen Anzahl von unterschiedlichen Typen ausgewählt werden kann, wobei die Außenabmessungen der Mobiltelefone in einem weiten Bereich variieren können. Insbesondere die sich in Fig. 1 von rechts nach links erstreckende Länge des dort abgebildeten Mobiltelefons 7 füllt den Teil-Innenraum 11 nicht aus. Insbesondere wäre noch Platz für eine oben (d. h. in der Fig. 1 nach rechts weisend) an dem Mobiltelefon 7 oder einem anderen Mobiltelefon herausragenden Antenne. Aber auch die sich in Fig. 2 von rechts nach links erstreckende Breite des Mobiltelefons füllt den Teil-Innenraum 11 nicht aus. Die Auflagefläche des Einsatzes 5, auf der das Mobiltelefon 7 aufliegt, ist vorzugsweise aus rutschfestem Material gebildet, vorzugsweise durch eine Schicht aus weichem Kunststoff. Alternativ ist die Auflagefläche z. B. entsprechend strukturiert, so dass sowohl der Haftreibungskoeffizient als auch der Gleitreibungskoeffizient hoch sind.

Der Einsatz 5 bildet sowohl in dem Längsschnitt gemäß Fig. 1 als auch in dem Querschnitt gemäß Fig. 2 betrachtet eine Schulter, d. h. einen seitlich des Teil-Innenraums 11 gelegenen Bereich, in dem er sich oberhalb des Niveaus der Auflagefläche für das Mobiltelefon 7 in etwa horizontaler Richtung erstreckt. Von diesem Niveau aus erhebt sich das Material des Einsatzes 5 dann auf das Niveau des Randes 6 des Unterteils 2. Auf dem genannten Zwischenniveau ist in dem in Fig. 1 und Fig. 2 dargestellten geschlossenen Zustand des Gehäuses 1 eine Schaumstoffplatte 8 aufgelegt, die an der Unterseite des Deckels 9 befestigt sein kann. Die Höhe bzw. Dicke der Schaumstoffplatte 8 ist so bemessen, dass sie von der unteren Oberfläche des Deckels 9 bis auf das Zwischenniveau reicht und dort auf der Schulter des Einsatzes 5 aufliegt. Ferner ist die Höhe des Einsatzes 5 in dem Bereich des Teil-Innenraums 11, in dem das Mobiltelefon 7 oder andere Mobiltelefone angeordnet werden können, so bemessen, dass die Dicke bei Mobiltelefonen mit einer Dicke im üblichen Bereich (die Dicke ist die Dimension, die in Fig. 1 und Fig. 2 sich in vertikaler Richtung erstreckt) größer ist als die Höhe zwischen der Auflagefläche für das Mobiltelefon 7 bis zur Oberkante der Schulter. Auf diese Weise ragt das Mobiltelefon über das Niveau der Schulter hinaus und drückt daher die Schaumstoffplatte 8 bei geschlossenem Deckel 9 auf das Mobiltelefon, wie aus Fig. 1 und Fig. 2 erkennbar ist. Daher wird der Schaumstoff der Schaumstoffplatte 8 zusammengedrückt (nicht in Fig. 1 und Fig. 2 dargestellt) und übt aufgrund der resultierenden elastischen Verformung eine Anpresskraft auf das Mobiltelefon 7 aus, die das Mobiltelefon zusätzlich zu seiner Gewichtskraft auf die Auflagefläche des Einsatzes 5 drückt.

Die Schaumstoffplatte 8 ist aus einem Material hergestellt, das bei hindurch tretenden elektromagnetischen Wellen, insbesondere in den von Mobiltelefonen benutzten Frequenzbereichen, hohe dielektrische Verluste bewirkt, so dass die Wellen gedämpft werden und eine Abschirmwirkung erzielt wird. Z. B. ist in dem Schaumstoffmaterial Kohlenstoff verteilt, der zumindest den wesentlichen Anteil der dielektrischen Verluste bewirkt. Bei dem Schaumstoffmaterial kann es sich zum Beispiel um Polyurethanschaumstoff handeln.

Ganz grundsätzlich, losgelöst von dem Ausführungsbeispiel gemäß Fig. 1 und Fig. 2 dient die durch das Gehäuse und durch das elastische Material gebildete elektromagnetische Abschirmung nicht nur dazu, die von dem Mobiltelefon ausgehenden Funksignale zu dämpfen bzw. abzuschirmen, sondern auch Störsignale, die andernfalls auf das Mobiltelefon einwirken könnten. Solche Störsignale können z. B. auch von dem Kraftfahrzeug selbst oder von Einrichtungen innerhalb des Kraftfahrzeugs erzeugt werden.

Geeignete Schaumstoffe mit elektromagnetischer Abschirmwirkung werden z. B. von der Emc-Technik und Consulting GmbH, Emilienstraße 35, 70563 Stuttgart vertrieben. Für das Ausführungsbeispiel gemäß Fig. 1 und 2 kann beispielsweise der von der Emc GmbH angebotene homogene Dämpfungs-Schaumstoff mit der Bezeichnung C-RAM MT eingesetzt werden. Bei einer alternativen Ausgestaltung kann auch ein von der Emc GmbH angebotener so genannter Pyramiden-Absorber mit der Bezeichnung C-RAM SFC eingesetzt werden, der an einer Seite pyramidenförmige, spitz zulaufende Bereiche bildet. Auch dieser Absorber dämpft elektromagnetische Wellen. Der Pyramiden-Absorber hat den Vorteil, dass er sehr viel weiter von der Unterseite des Deckels 9 oder eines anderen Deckels in den Teil-Innenraum hineinragen kann, in dem das Mobiltelefon aufgenommen ist oder aufgenommen werden soll. Dadurch können sich die Pyramidenspitzen bis in den gegebenenfalls freibleibenden Bereich zwischen dem Mobiltelefon und den Rändern der von dem Einsatzteil gebildeten Wanne hineinerstrecken und wirksam etwaige Bewegungen des Mobiltelefons verhindern. Da die Pyramidenspitzen mit geringerer Kraft in Richtung der Deckelunterseite eingedrückt werden können, liegt der Deckel dennoch gut auf dem Unterteil des Gehäuses auf. Ein derartiger Pyramiden-Absorber kann jedoch auch bei anderen Ausführungsformen eines Gehäuses eingesetzt werden.

Nicht in Fig. 1 und Fig. 2 dargestellt ist, dass der Deckel auch z. B. über ein Scharnier an dem Unterteil 2 angelenkt sein kann.

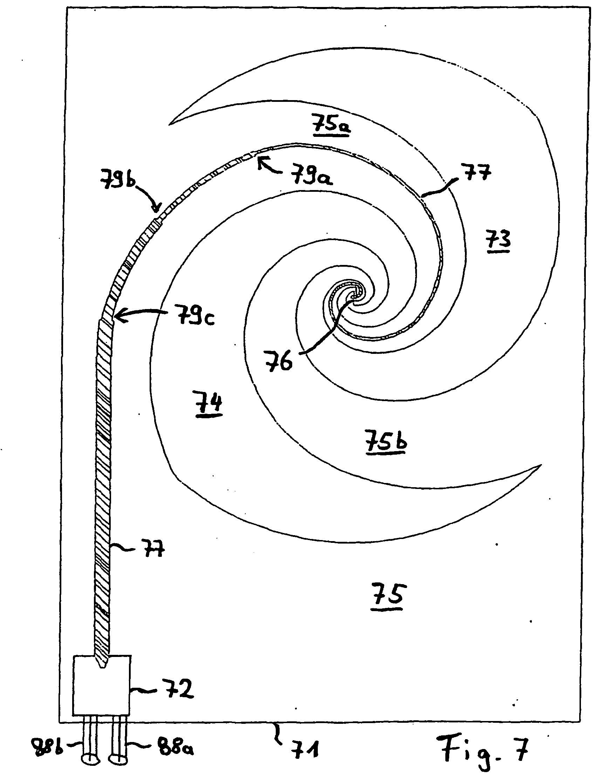

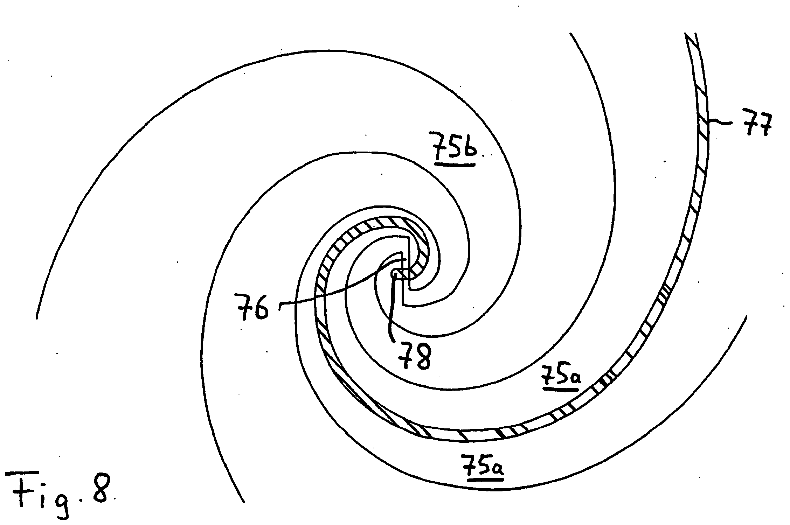

In dem Zwischenraum zwischen dem Boden des Unterteils 2 und dem Teil-Innenraum 11 (Wanne), in dem das Mobiltelefon 7 angeordnet ist, ist eine Platine 3 angeordnet. Elektrische Bauteile und Schaltungselemente sowie weitere Einrichtungen können an der Platine 3 ausgebildet sein. Anstelle einer Platine kann ferner ein anderer Körper vorgesehen sein, der solche Einrichtungen trägt. Diese Einrichtungen können insbesondere Funktionen ausüben, die für den Betrieb des Mobiltelefons 7 oder eines anderen Mobiltelefons in dem Gehäuse 1 oder in einem anderen Gehäuse dienen. Insbesondere wird bevorzugt, dass das Mobiltelefon innerhalb des Gehäuses benutzt werden kann. Hierzu ist eine der Einrichtungen an der Platine 3 oder dem anderen Körper als Antennenstruktur ausgebildet, so dass zwischen der Antennenstruktur und der Antenne des Mobiltelefons Funksignale übertragen werden können. Insbesondere kann die Platine 3 die Antennenstruktur gemäß Fig. 7 und 8 sein. Die Antennenstruktur ist wiederum über eine Durchführung 4 durch das Gehäuse mit der Fahrzeugantenne verbunden. Weitere Einrichtungen wie beispielsweise ein Kompenser, und/oder eine zweite Antennenstruktur für eine Bluetooth-Schnittstelle zwischen dem Mobiltelefon und den Einrichtungen an der Platine 3 oder dem sonstigen Körper können ebenfalls vorgesehen sein. Z. B. über die Bluetooth-Schnittstelle kann das Mobiltelefon daher in an sich bekannter Weise an eine Freisprecheinrichtung des Kraftfahrzeugs mit zumindest einem Lautsprecher und mit zumindest einem Mikrofon verbunden sein.

Es kann jedoch auch nur eine einzige Antennenstruktur in dem Gehäuse angeordnet sein, die breitbandig ausgestaltet sein kann (also Signale innerhalb eines Frequenzbereichs breitbandig von dem Mobiltelefon empfangen und/oder zu dem Mobiltelefon senden kann), z. B. die noch anhand einer weiteren Figur beschriebene Antennenstruktur. Dabei kann die Antennenstruktur eine einzige oder mehrere einzelne Antennen aufweisen. Der breitbandige Frequenzbereich umfasst z. B. sowohl die Signalfrequenz-Bereiche, in denen die Signale eines Mobiltelefon-Netzes übertragen werden (insbesondere zwischen Mobiltelefon und ortsfester Basisstation des Netzes) und auch in denen Signale zur Steuerung des Mobiltelefonbetriebes und/oder zur Ankopplung des Mobiltelefons an eine Freisprecheinrichtung in dem Kraftfahrzeug übertragen werden (z. B. nach dem Bluetooth-Standard).

Unter einem Kompenser wird eine Schaltungsanordnung zur Kompensation von Dämpfungsverlusten verstanden, die in einer Antennenleitung entstehen, wie z. B. in DE 10114531 beschrieben. Auch kann die Bedienung des Mobiltelefons bei einer solchen Freisprecheinrichtung z. B. über einen Sprachdialog und/oder über eine Tastatur im Innenraum des Kraftfahrzeugs durchgeführt werden.

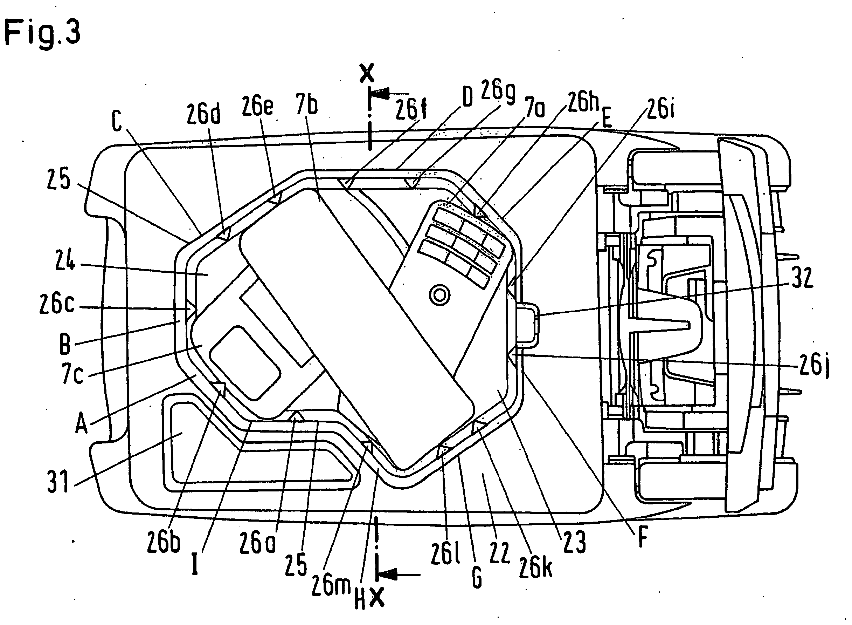

Figur 3 zeigt das Unterteil eines Gehäuses, welches elektromagnetisch abschirmend ausgestaltet ist. Das Gehäuse weist eine harte, aus im Wesentlichen unelastischem Material gefertigte Unterschale auf, die beispielsweise aus Kunststoff gebildet ist. Die Unterschale weist einen wannenförmigen Aufnahmeraum 23 zur Aufnahme eines Mobiltelefons 7 auf. In die Unterschale ist eine Auskleidung aus elastischem Material eingelegt, beispielsweise aus TPE. Die Auskleidung folgt den Konturen der Unterschale und definiert somit die Oberfläche des Aufnahmeraums 23. Das Material der Auskleidung definiert den Boden 24 und die in sich geschlossen umlaufende seitliche Randfläche 25, die den wannenförmigen Aufnahmeraum 23 nach unten und seitlich begrenzen. Dabei ist die Höhe der Randfläche vorzugsweise über ihren Verlauf konstant und groß genug, dass Mobiltelefone mit gängigen Abmessungen nicht über die Oberkante des wannenförmigen Aufnahmeraums 23 hinausragen, wenn sie darin angeordnet sind. Vorzugsweise sind die Unterschale und/oder die Auskleidung aus elektromagnetisch abschirmendem Material gebildet. Insbesondere kann zum Beispiel die Auskleidung aus einem Schaumstoffmaterial bestehen, das vorzugsweise elektromagnetisch abschirmende Eigenschaften hat.

Die Auskleidung ist so geformt, dass ihr Material an der Randfläche 25 eine Mehrzahl von dreiecksförmigen Vorsprüngen 26 a bis 26 m aufweist. Die Vorsprünge 26 sind daher ebenfalls aus elastischem Material gebildet. Die Vorsprünge 26 sind über den Umfang des Aufnahmeraums 23 verteilt, allerdings vorzugsweise nicht gleichmäßig verteilt, das heißt benachbarte Vorsprünge weisen betrachtet entlang dem Verlauf der Randfläche 25 keinen konstanten Abstand zueinander auf.

Die Vorsprünge sind jeweils an einem an sich geradlinig verlaufenden Abschnitt A - I der Randfläche 25 angeordnet. Die geradlinigen Abschnitte A - I verlaufen jeweils zu ihren beiden benachbarten Abschnitten abgewinkelt, so dass insgesamt neun Ecken zwischen den Abschnitten A - I gebildet sind. Davon sind acht der neun Ecken Außenecken. Eine der Ecken, nämlich die Ecke zwischen den Abschnitten H und I ist eine Innenecke, das heißt der innerhalb des Aufnahmeraumes gemessene Winkel zwischen dem Verlauf der Abschnitte H und I beträgt mehr als 180°. Die Abschnitte H und I bilden daher einen konkaven Verlauf der Randfläche 25. An den Abschnitten I und H geht der konkave Verlauf in einen einzigen konvexen Verlauf der Randfläche 25 über. Im Ergebnis wird der Verlauf der Randfläche durch einen einzigen konkaven Abschnitt und einen einzigen konvexen Abschnitt gebildet. Es sind jedoch auch Gestaltungen der Randfläche denkbar, die mehr als einen konkaven Abschnitt aufweisen.

Die Abschnitte A, B, C und D verlaufen entlang einer spiralförmigen Linie. Dies folgt daraus, dass die Außenecke zwischen den Abschnitten A und B und die Außenecke zwischen den Abschnitten B und C etwa den gleichen Eckwinkel aufweisen, wobei die Abschnitte A und B etwa gleich lang sind, der Abschnitt C jedoch länger ist. Der sich an den Abschnitt C anschließende Abschnitt D ist wiederum etwa gleich lang wie der Abschnitt C, wobei jedoch der Winkel der Ecke zwischen den Abschnitten C, D größer ist als der Winkel zwischen den Abschnitten B und C.

Ebenfalls entlang einer spiralförmigen Linie, jedoch nicht derselben spiralförmigen Linie wie die Abschnitte A - D, verlaufen die Abschnitte E, F und G. Der gesamte Verlauf der Randfläche 25 wird daher durch einen konkaven Abschnitt und zwei Teil-Verläufe etwa entlang jeweils einer spiralförmigen Linie gebildet.

Im Ergebnis und in Kombination mit den Vorsprüngen 26 ergibt sich eine Vielzahl von unterschiedlichen Positionen, in denen Mobiltelefone in dem Aufnahmeraum 23 angeordnet werden können, wobei sie in der jeweiligen Position auf dem Boden 24 aufliegen und gleichzeitig an gegenüberliegenden Seiten an der Randfläche 25 anliegen. In manchen dieser Positionen, die auch als Haltepositionen bezeichnet werden können, weil das Mobiltelefon in dieser Position gehalten werden kann, wird das jeweilige Mobiltelefon sogar an mehreren Seiten von Punkten oder Abschnitten der Randfläche 25 kontaktiert.

Hinzu kommt, dass die Auskleidung aus elastischem Material besteht, so dass einerseits eine Klemmwirkung aufgrund elastischer Kräfte entstehen kann und andererseits auch Mobiltelefone mit leicht unterschiedlichen Abmessungen in derselben Position gehalten werden können.

Wie Figur 3 ebenfalls zeigt, ist neben dem wannenförmigen Aufnahmeraum 23 zur Aufnahme eines Mobiltelefons auch ein kleinerer wannenförmiger Aufnahmeraum 31 zur Aufnahme zum Beispiel von Steckern oder Adaptern zum Anschluss des Mobiltelefons sowohl in der Unterschale als auch in der Auskleidung ausgebildet.

Figur 3 zeigt die Umrisse von drei verschiedenen Mobiltelefonen 7a, 7b, 7c mit unterschiedlichen Außenabmessungen. Das Mobiltelefon 7b ist länger als die Mobiltelefone 7a und 7c. Das Mobiltelefon 7c (zum Beispiel ein PDA) ist breiter als die Mobiltelefone 7a und 7b.

Außerdem weist der Abschnitt f der Randfläche 25 eine Aussparung 32 auf. In dieser Aussparung 32 können elektrische Kontakte zum elektrischen Anschließen des in dem Aufnahmeraum 23 aufgenommenen Mobiltelefons 7 angeordnet sein, beispielsweise eine USB-A-Buchse, an die ein Ladestecker zum Aufladen der Batterie des Mobiltelefons 7 eingesteckt werden kann.

Bei anderen Ausführungsformen der erfindungsgemäßen Anordnung können elektrische Kontakte für andere Zwecke und/oder elektrische Kontakte für verschiedene Zwecke vorgesehen sein. Beispielsweise können solche Kontakte den Anschluss des Mobiltelefons an den Anschluss zum Übertragen des Antennensignals zu der Fahrzeugantenne dienen.

Unter der Unterschale, dass heißt zwischen der Unterschale und dem Boden des Gehäuses, der beispielsweise aus Metall besteht, können Teile einer elektrischen Schaltung angeordnet sein, beispielsweise eine Leiterplatte mit entsprechenden Bauteilen. Die Leiterplatte kann beispielsweise eine Antennenstruktur aufweisen, mit der elektromagnetische Wellen zwischen dem Mobiltelefon 7 und der Leiterplatte drahtlos übertragen werden können. Bei der Antennenstruktur kann es sich um eine Sende- und/oder Empfangsstruktur handeln.

An dem rechts in Fig. 3 dargestellten Ende des Gehäuses kann bei einer besonderen Ausgestaltung über ein Scharnier ein Deckel angelenkt sein, der durch Drehen um eine Drehachse des Scharniers in eine geschlossene Position des Gehäuses gebracht werden kann. In der geschlossenen Position drückt ein an der Unterseite des Deckels angeordnetes Schaumstoffmaterial auf das in dem wannenförmigen Aufnahmeraum 23 angeordnete Mobiltelefon, sodass dieses in dem Aufnahmeraum 23 zusätzlich fixiert wird. Das Schaumstoffmaterial ist vorzugsweise so ausgestaltet, dass es elektromagnetische Wellen im GHz-Bereich absorbiert.

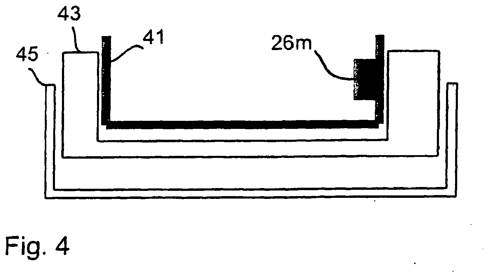

Die Darstellung in Fig. 4 zeigt den Querschnitt entlang der Linie x-x in Fig. 3, wobei die Darstellung jedoch schematisch und nicht maßstabsgerecht zu verstehen ist. Außerdem ist die Darstellung explosionsartig, d. h. die drei dargestellten Teile 41, 43, 45 sind in vertikaler Richtung mit Abstand zueinander dargestellt. Im Betriebszustand dagegen liegen die drei Teile aneinander an.

Das Gehäuse ist in Fig. 4 mit dem Bezugszeichen 45 bezeichnet. Es besteht vorzugsweise aus Metall (insbesondere Metallblech) und weist in Ausführungen für die Praxis (wie in Fig. 3 dargestellt) vorzugsweise abgerundete Ecken auf. Dementsprechend sind vorzugsweise auch bei den Teilen 41, 43 Abrundungen vorgesehen, die in Fig. 4 nicht dargestellt sind.

Die Unterschale ist mit dem Bezugszeichen 43 bezeichnet. Anders als in Fig. 4 dargestellt, entspricht ihre Breite der Breite des Innenraums des Gehäuses 45, sodass sie ohne Spiel in das Gehäuse 45 passt. Die Unterschale ist ein formstabiles Teil. Der von den (durch die Linien in Fig. 4 dargestellten) Umrissen der Unterschale umschlossene Raum kann vollständig oder teilweise mit dem Material der Unterschale ausgefüllt sein.

Die Auskleidung ist mit dem Bezugszeichen 45 bezeichnet. Sie besteht aus TPE. An der Auskleidung sind die Vorsprünge 26 ausgebildet. Der Vorsprung 26m ist rechts in der Darstellung erkennbar. Auch die Auskleidung passt ohne Spiel (anders als in Fig. 4 dargestellt) in die Unterschale 43.

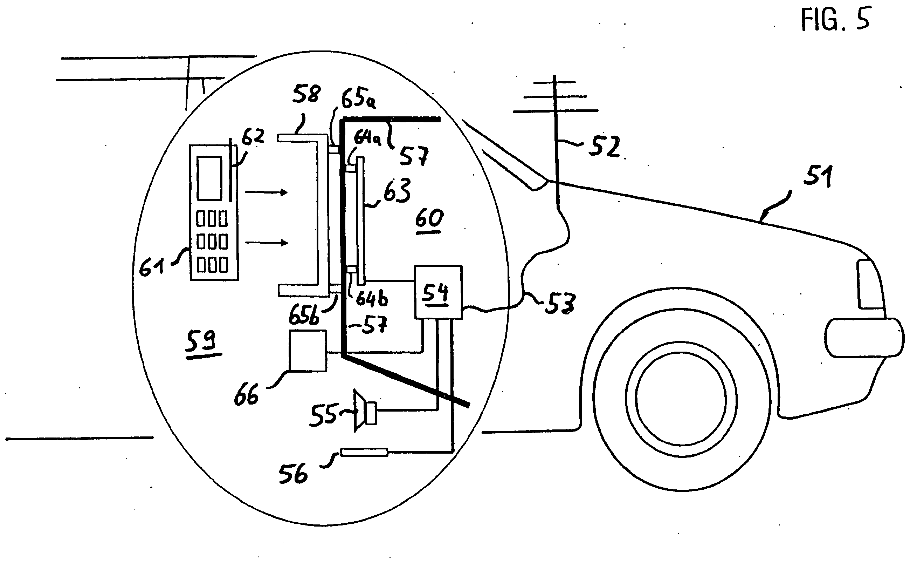

Figur 5 lässt Teile einer Seiteneinsicht eines PKW für den Betrieb auf Straßen erkennen, wobei innerhalb einer ovalen Umrisslinie eine Anordnung zur Ankopplung eines Mobiltelefons an Einrichtungen des Kraftfahrzeugs schematisch und vergrößert dargestellt ist. Der PKW 51 weist eine Außenantenne 52 auf, über die insbesondere Signale zum Betreiben eines Mobiltelefons in einem Mobilfunknetz gesendet und/oder empfangen werden können. Alternativ oder zusätzlich kann die Antenne auch zum Senden und/oder Empfangen anderer Signale verwendet werden, beispielsweise zum Empfangen von Signalen zur Bestimmung der momentanen Position des Kraftfahrzeugs in einem satellitenbasierten Positionsbestimmungssystem wie dem GPS. Für die verschiedenartigen Signale können jedoch auch verschiedene Antennen vorgesehen sein.

In dem Ausführungsbeispiel gemäß Figur 5 ist die Antenne 52 über eine Antennenleitung 53 mit einer im Fahrzeug verbauten Einrichtung 54 verbunden. Alternativ kann die Antenne jedoch auch direkt mit einer Antennenstruktur im Innern des Fahrzeugs verbunden sind, also kann die Einrichtung 54 entfallen.

In dem Ausführungsbeispiel ist die Einrichtung 54 eine Einheit eines Freisprechsystems, um es Personen in dem Fahrzeug zu ermöglichen, Telefongespräche zu führen, ohne das Mobiltelefon in den Händen halten zu müssen. Über jeweils eine elektrische Verbindung ist die Einrichtung 54 daher mit zumindest einem Lautsprecher 55 und mit einem Mikrofon 56 verbunden. Beim Führen eines Telefonats werden die empfangenen Sprachsignale über den Lautsprecher 55 in akustische Signale umgewandelt, die im Fahrzeug-Innenraum gehört werden können, und werden Laute in dem Fahrzeug-Innenraum über das Mikrofon 56 empfangen, so dass entsprechende Signale zu anderen Teilnehmern des Mobilfunknetzes übertragen werden können. Dabei kann die Einrichtung 54 unmittelbar die Funktion des Mobiltelefons übernehmen oder kann die von dem Mikrofon 56 empfangenen Signale zu dem Mobiltelefon weiterleiten bzw. von dem Mobiltelefon empfangene Signale an den Lautsprecher 55 weiterleiten. Dabei kann auch eine Bearbeitung der Signale stattfinden. Weiterhin ist es möglich, dass außer der Einrichtung 54 auch noch weitere Einrichtungen daran beteiligt sind, z. B. eine im Kraftfahrzeug eingebaute Stereoanlage.

Durch eine breite Linie 57 ist der Rand des Fahrzeug-Innenraums angedeutet, in dem sich während der Fahrt Personen befinden können. Die Einrichtung 54 befindet sich daher außerhalb des für Personen vorgesehenen Raums, da sie rechts von der Linie 57 dargestellt ist. Der Lautsprecher 55, das Mikrofon 56 sowie ein Halter 58 zum Halten eines Mobiltelefons sind links von der Linie 57 dargestellt und befinden sich in dem Innenraum für Personen, der mit dem Bezugszeichen 59 bezeichnet ist. Der Raum für die Einrichtung 54 und weitere Geräte befindet sich typischerweise zwischen den Bedienkonsolen für den Fahrzeugführer und dem Motorraum des Fahrzeugs und ist in Figur 5 mit dem Bezugszeichen 60 bezeichnet. Ein Mobiltelefon 61 mit einer Mobiltelefonantenne 62 kann von dem Halter 58 aufgenommen werden bzw. von diesem gehalten werden, wie durch zwei nach rechts weisende Pfeile angedeutet ist. Ebenfalls in dem Raum 60, also außerhalb des Personenraums 59, ist die Antennenstruktur 63 zur Ankopplung der Mobiltelefonantenne 62 an Einrichtungen des Kraftfahrzeugs, insbesondere an die Einrichtung 54 angeordnet. Die Antennenstruktur 63 ist in dem Ausführungsbeispiel über Befestigungselemente 64a, 64b mit der Wand des Personenraums 59 verbunden. Die Wand wird in der Darstellung von Figur 5 durch die Linie 57 symbolisiert. An einer Seite der Wand, die der Antennenstruktur 63 unmittelbar gegenüberliegt, ist der Halter 58 über Befestigungselemente 65a, 65b mit der Wand verbunden.

Auf diese Weise kann eine verlustarme Übertragung von Signalen zwischen der Antennenstruktur 63 und der Mobiltelefonantenne 62 erzielt werden, wenn das Mobiltelefon 61 von dem Halter 58 gehalten wird. Die Antennenstruktur 63 kann wie z. B. anhand von Figur 7 noch beschrieben wird, eine flache, im wesentlichen zweidimensionale Struktur sein, deren Oberflächennormale sich etwa senkrecht durch die Wand hindurch erstreckt und in einem geringen Abstand zwischen Antennenstruktur 63 und Mobiltelefonantenne 62 auf die Mobiltelefonantenne 62 trifft. Der Abstand ist z. B. kleiner als 10 cm, vorzugsweise kleiner als 5 cm. Dabei befindet sich die Mobiltelefonantenne 62 insbesondere im Nahfeld der Antennenstruktur 63, bezogen auf die höchste Grenzfrequenz der Antennenstruktur 63, die insbesondere gleich der höchsten Frequenz der Frequenzbereiche ist, in denen die Antennenstruktur Signale von dem Mobiltelefon 61 empfängt oder an dieses überträgt. Die Antennenstruktur 63 ist dabei zweckmäßigerweise an einer Stelle der Wand des Personenraums 59 angeordnet, an der die Wand keine oder allenfalls eine geringe abschirmende Wirkung für elektromagnetische Strahlung hat. Z. B. kann die Wand aus den heutzutage im PKW üblichen Kunststoffmaterialien gefertigt werden.

Außerdem kann sich im Personenraum 59 ein zusätzliches Bedienteil 66 zur Bedienung der Einrichtung 54 und/oder zur Bedienung des Mobiltelefons 61 befinden. Durch Bedienung des Bedienteils 66 kann z. B. eine Teilnehmerverbindung über das Mobilfunknetz hergestellt und/oder beendet werden. Dabei kann das Bedienteil 66 auch eine Anzeigeeinrichtung zur optischen Anzeige von Informationen aufweisen, beispielsweise ein Display zur Anzeige der Telefonnummer eines anrufenden Teilnehmers und/oder zur Anzeige von anderen Informationen. Auch können z. B. in der Einrichtung 54 oder in dem Mobiltelefon 61 gespeicherte Adress- und/oder Telefonnummerinformationen über das Bedienteil 66 abgerufen werden und/oder darauf zugegriffen werden. Das Bedienteil 66 ist wie in Figur 5 angedeutet, über eine Verbindungsleitung mit der Einrichtung 54 verbunden.

In bevorzugter Ausgestaltung wird die in Figur 5 dargestellte und zuvor beschriebene Anordnung beispielsweise wie folgt betrieben: Eine Benutzer setzt nach dem Einsteigen in das Kraftfahrzeug 51 sein Mobiltelefon 61 in die Halterung 58 ein und schaltet das Mobiltelefon 61 ein. Alternativ dazu ist das Mobiltelefon 61 bereits eingeschaltet. Die Antennenstruktur 63 empfängt von der Mobiltelefonantenne 62 ausgesendete Signale, die über die Leitungsverbindung zu der Einrichtung 54 übertragen werden. Die Einrichtung 54 erkennt auf diese Weise, dass ein Mobiltelefon angekoppelt wurde, lässt die gesendeten Signale über die Antennenleitung 53 zu der Außenantenne 52 durch und beginnt damit, eine zusätzliche Bluetooth-Funkverbindung zu dem Mobiltelefon 61 aufzubauen. Für diese Bluetooth-Verbindung wird wiederum die drahtlose Verbindung zwischen der Antennenstruktur 63 und der Mobiltelefonantenne 62 genutzt. Die Bluetooth-Verbindung kann nun für an sich bekannte Anwendungen, wie z. B. die Steuerung des Mobiltelefons 61 durch Bedienung des Bedienteils 66 und/oder für den Anschluss des Mobiltelefons 61 an die Freisprechanlage des Kraftfahrzeugs 51 verwendet werden.

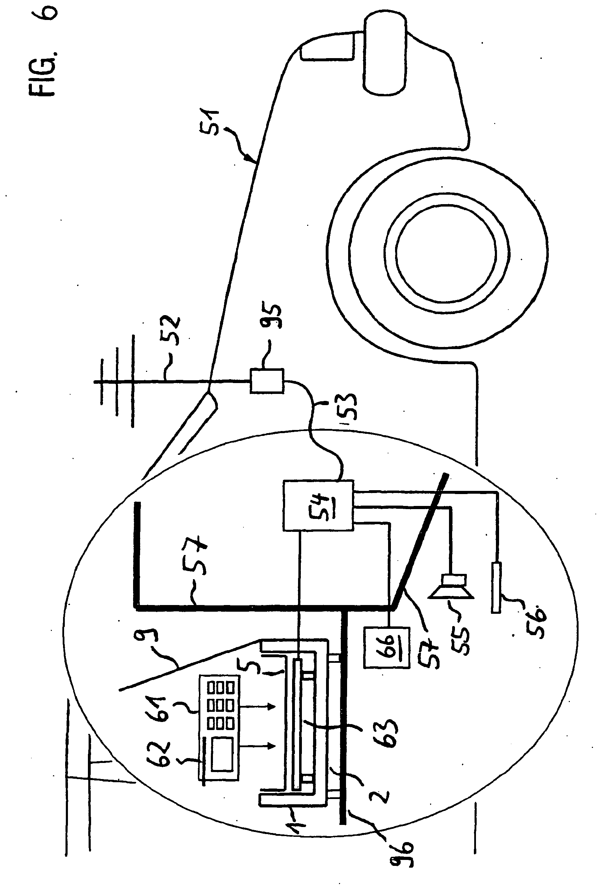

Figur 6 zeigt eine alternative Anordnung in dem Kraftfahrzeug 51. Gleiche Teile werden dabei mit denselben Bezugszeichen wie in Figur 5 bezeichnet und nicht nochmals erläutert.

Bei dieser Ausführungsform ist zur Aufnahme des Mobiltelefons 61 ein Gehäuse 1 mit einem Unterteil 2 und einem Deckel 9 vorgesehen, das z. B. auf einer Mittelkonsole 96 zwischen den Vordersitzen eines PKW bzw. in die Mittelkonsole 96 integriert angeordnet ist. Bei dem Gehäuse 1 kann es sich z. B. um eine Ausgestaltung handeln, wie anhand der Figuren 1 bis 3 beschrieben wurde.

Die Antennenstruktur 63 ist in dem Gehäuse 1 angeordnet, z. B. zwischen dem wannenförmigen Einsatzteil 5 und dem durch das Unterteil 2 gebildeten Boden.

Zum Ausgleich von Dämpfungsverlusten der Signale zwischen der Außenantenne 52 und dem Mobiltelefon 61 ist ein Kompenser 95 fest im Fahrzeug verbaut, hier in der Nähe der Außenantenne 52. Der Kompenser kann jedoch z. B. auch in das Gehäuse 1 integriert sein. Bei der Ausführungsform gemäß Figur 5 könnte er in den Halter 58 integriert sein oder in die Einrichtung 54.

Unabhängig von der konkret gewählten Ausführungsform der Halterung oder des Gehäuses kann insbesondere bei Verwendung einer zweidimensionalen Antennenstruktur ein zusätzlicher Reflektor zur Reduzierung der Antennenverluste durch Abstrahlung in Richtung der Rückseite der Antennenstruktur eingesetzt werden. Der Reflektor reflektiert die zur Rückseite (d. h. zu der dem Mobiltelefon abgewandten Seite) von der Antennenstruktur abgestrahlten Wellen in Richtung der Vorderseite.

Z. B. kann der Reflektor an dem Träger der Antennenstruktur angeordnet sein, z. B. als zusätzliche metallische Schicht als Teil einer Platine mit mehr als zwei Schichten, in denen sich elektrisch leitfähige Bereiche befinden. In einer der Schichten ist z. B. die eigentliche Antennenstruktur angeordnet, in einer zweiten Schicht die Zuleitung wie z. B. in Figur 7 dargestellt und in einer dritten, darunter liegenden Schicht der Reflektor. Der Reflektor kann jedoch auch als separates Bauteil in einem Abstand zur Rückseite der Antennenstruktur angeordnet sein, z. B. als Metallplatte, die bei dem Ausführungsbeispiel von Figur 1 und Figur 2 zwischen der Platine 3 und dem Boden des Unterteils 2 angeordnet ist. Insbesondere bei metallischem Gehäuse kann aber auch der Gehäuseboden selbst, z. B. der Boden des Gehäuses 2 gemäß Figur 1 als Reflektor wirken.

Im Folgenden soll noch auf einen Vorteil eingegangen werden, der bei Verwendung einer Antennenstruktur besteht, die zirkular polarisierte Wellen abstrahlt. Insbesondere ist dies bei Antennenstrukturen mit spiralförmigen leitfähigen und nicht leitfähigen Bereichen der Fall, z. B. bei der Ausführungsform gemäß Figur 7 und 8. Alternativ lassen sich linear polarisierte Wellen aber auch z. B. mit zwei linearen, geradlinigen metallischen Bereichen erzeugen, die 90 ° gegeneinander gedreht orientiert sind und mit einem Phasenunterschied von 90 ° gespeist werden.

Antennenstrukturen, die zirkular polarisierte Wellen erzeugen bzw. deswegen auch in beliebiger Richtung linear polarisierte Wellen mit hohem Wirkungsgrad empfangen können, eignen sich besonders für Halterungen oder Gehäuse zur Aufnahme von Mobiltelefonen, die verschiedene Orientierungen der Mobiltelefonantenne erlauben. Insbesondere kann daher die Halterung gemäß Figur 3 in vorteilhafter Weise mit einer solchen Antennenstruktur kombiniert werden.

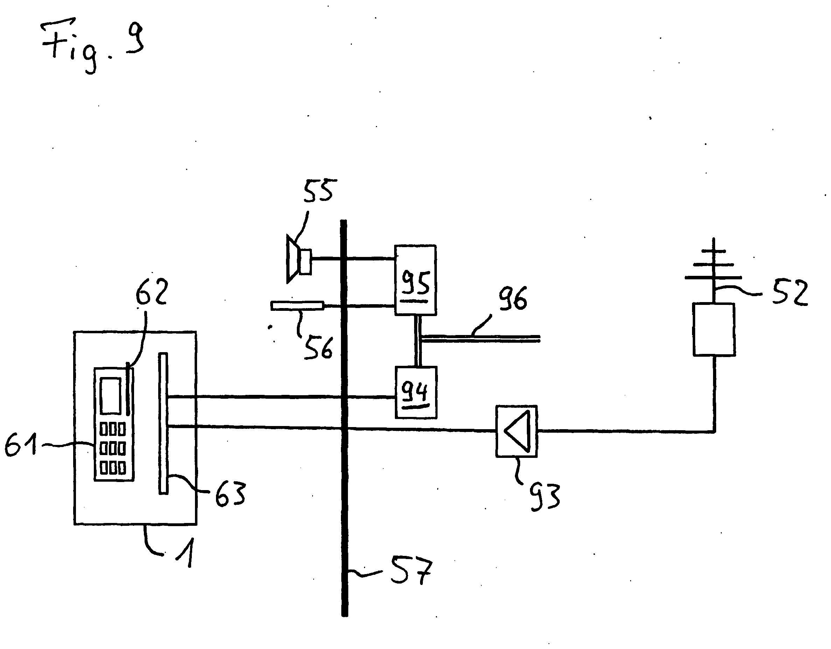

Eine weitere Anordnung, die alternativ zu den in Figur 5 und Figur 6 dargestellten Anordnungen in einem Kraftfahrzeug vorgesehen sein kann, ist in Figur 9 dargestellt. Gleiche Bezugszeichen bezeichnen wiederum gleiche bzw. entsprechende Elemente und Einheiten wie in Figur 5 und Figur 6. Die Außenantenne 52 des Kraftfahrzeugs ist über eine Antennenzuführung direkt mit der Antennenstruktur 63 verbunden, wobei jedoch in der Antennenzuführung weitere Einrichtungen, wie z. B. der dargestellte Verstärker 93 zum Verstärken der Signale vorgesehen sein kann. "Direkt" bedeutet jedoch, dass die Einrichtung 54 aus Figur 5 und Figur 6 nicht in der Verbindung zwischen der Außenantenne 52 und der Antennenstruktur 63 angeordnet ist.

Die über die Außenantenne 52 empfangenen Signale werden drahtlos von der Antennenstruktur 63 zu der Mobiltelefonantenne 62 übertragen. Dabei ist das Mobilfunknetz vorzugsweise als WLAN ausgeführt. Dementsprechend ist das Mobiltelefon 61 eine mobile WLAN-Station. Auch die von dem Mobiltelefon 61 erzeugten Sendesignale werden (in umgekehrter Richtung) über die genannte Verbindung zu der Außenantenne 52 übertragen und von dieser ausgesendet.

Das Mobiltelefon 61 ist vorzugsweise ausgestaltet, für den Freisprechbetrieb innerhalb des Kraftfahrzeugs die erforderlichen Sprachsignale zu erzeugen, die beispielsweise gemäß dem Bluetooth-Standard über die Ankopplung an die Antennenstruktur 63 über eine Leitungsverbindung zu einer Einrichtung 94, von dieser über einen Datenbus 96 des Kraftfahrzeuges zu einer Audioeinrichtung 95 und von dieser zu einem Lautsprecher 55 übertragen zu werden. Dabei kann die Audioeinrichtung 95 auch entfallen, wenn die Umsetzung der Bluetooth-Signale auf Steuersignale zum Ansteuern des Lautsprechers 55 unmittelbar von der Einrichtung 94 vorgenommen wird. In entsprechender Weise ist ein Mikrofon 56 an die Audioeinrichtung 95 oder direkt an die Einrichtung 94 angeschlossen. Wie auch in Figur 5 und Figur 6 ist die Grenze zwischen dem Fahrzeug-Innenraum für den Aufenthalt von Personen wieder durch eine Linie 57 dargestellt. Der Personenraum befindet sich links von der Linie 57 in der Darstellung von Figur 9.

Wenn das Mobilfunknetz als WLAN ausgeführt ist, können die eingehenden Sprachsignale gemäß dem IP-Standard als VoIP-Signale (Voice over Internet Protocol) übertragen werden. Im Freisprechbetrieb kann sich die Funktion des Mobiltelefons daher darauf beschränken, die VoIP-Signale vom WLAN auf den Bluetooth-Standard oder einen anderen für den fahrzeuginternen Gebrauch verwendeten Standard umzusetzen. Umgekehrt können von der Einrichtung 94 oder von der Audioeinrichtung 95 erzeugte Sprachsignale über die Antennenstruktur 63 zu dem Mobiltelefon 61 übertragen werden, von diesem auf WLAN umgesetzt werden und über die Außenantenne 52 ausgesendet werden.

Fig. 7 und Fig. 8 zeigen eine bevorzugte Ausführungsform einer Antennenstruktur, die einen plattenförmigen Träger 71 und an einer Seite (ohne Beschränkung der Allgemeinheit: die Vorderseite) in Streifenleitertechnik ausgeführte Spiralarmstrukturen aufweist. Unter Streifenleitertechnik wird verstanden, dass auf der Oberfläche der Trägerstruktur (z. B. einer Platte) streifenförmige Bereiche, die sich entlang der Oberfläche des Trägers erstrecken, aus elektrisch leitfähigem Material bestehen, während andere Bereiche der Oberfläche des Trägers nicht mit elektrisch leitfähigem Material abgedeckt sind. Z. B. kann der Träger eine Schicht Metall an seiner Oberfläche tragen, die gleichmäßig dick ist und sich über die gesamte Oberfläche an der Vorderseite erstreckt. Zur Herstellung der Streifenleitungsstruktur können dann z. B. diejenigen Bereiche, die frei von elektrisch leitfähigem Material sein sollen, demetallisiert werden, z. B. unter Verwendung von ätzenden Materialien oder durch Schleifen und Polieren. Die elektrisch leitfähigen Bereiche können alternativ aber auch örtlich selektiv aufgebracht werden.

Der Träger 71 ist beispielsweise aus glasfaserverstärktem Epoxidharz hergestellt, wie es in der Leiterplattentechnik für elektrische und elektronische Schaltungen üblich ist. Alternativ kann der Träger jedoch auch aus jedem anderen dielektrischen Material bestehen, z. B. aus Keramik oder mit Keramikpulver vermischtem Polytetrafluorethylen.

Die in Fig. 7 dargestellte Struktur weist einen ununterbrochenen Bereich 75 auf, der von der elektrisch leitfähigen Schicht gebildet wird. Die von elektrisch leitfähigem Material freien Bereiche haben die Form von zwei Spiralarmen und sind mit den Bezugszeichen 73, 74 bezeichnet, wobei die Bereiche 73, 74 im Zentrum der Spirale durch einen Übergangsbereich 76 miteinander verbunden sind (Fig. 8). Dementsprechend erstrecken sich zu den Bereichen 73, 74 komplementäre Bereiche 75a, 75b, die Teil des Bereichs 75 sind, bis in das Zentrum der Spirale, sind dort jedoch durch den Übergangsbereich 76 elektrisch voneinander getrennt. Die Spiralarme 75a, 75b sind daher lediglich über den Außenbereich des Bereichs 75 elektrisch miteinander verbunden.

Auf der Rückseite des Trägers 71 erstreckt sich, wie durch einen schraffierten Spiralarm in Fig. 7 und Fig. 8 dargestellt ist, ein Zuleitungsbereich 77 aus elektrisch leitfähigem Material. Bei dem Zuleitungsbereich 77 handelt es sich also wiederum um einen Streifen. Dieser Streifen verläuft unmittelbar gegenüberliegend von einem der metallischen Spiralarme 75a oder 75b, hier gegenüberliegend 75a. Der Streifen 77 erstreckt sich bis zum Zentrum der Spirale und überquert dort aber den Bereich, der dem Übergangsbereich 76 unmittelbar gegenüberliegt (Fig. 8). In dem dargestellten Ausführungsbeispiel ist der Streifen 77 im Zentrum elektrisch mit einer Verbindung 78 verbunden, die sich durch das Material des Trägers 71 hindurch erstreckt und den Streifen 77 elektrisch mit dem zentrumsseitigen Ende des Spiralarms 75b verbindet.

Alternativ dazu kann die Durchkontaktierung 78 entfallen und kann sich der Streifen 77 stattdessen weiter über die Rückseite des Übergangsbereichs 76 hinweg erstrecken, der Rückseite des Spiralarms 75b weiter folgen, jedoch etwa nach einer Erstreckung, die einer 180°-Krümmung um das Zentrum der Spirale entspricht, enden.

Wie aus der Fig. 7 erkennbar ist, verändert sich die Breite des Spiralarms 77 der Zuleitung in seinem Verlauf vom Zentrum der Spirale zum Rand des Trägers 71, wo er z. B. mit den Zentrumsleitern von Koaxialkabeln 88a, 88b elektrisch verbunden ist.

Die Abschirmung des Koaxialkabels ist in diesem Fall mit dem elektrisch leitfähigen Bereich 75 elektrisch verbunden. Durch die sich stufenartig ändernde Breite in dem Verlauf des Spiralarms 77 wird eine Anpassung der Impedanz an den gewünschten Anschlusswert der Antennenstruktur vorgenommen. Ist beispielsweise ein Anschlusswert von 50 Ohm erwünscht, beträgt die Impedanz ohne die Anpassung aber 120 Ohm, führt die stufenweise Änderung der Breite zu der gewünschten Anpassung. Die Anpassung kann auch als Transformation der Impedanz bezeichnet werden. Um eine optimale Anpassung zu erzielen, wird der Abstand zwischen den Stufen 79a, 79b (der Abstand wird nicht linear, sondern entsprechend dem Verlauf des Spiralarms 77 entlang der Krümmung gemessen) so gewählt, dass er gleich einem Viertel der Wellenlänge der Mittenfrequenz des Frequenzbereichs ist, in dem die Antennenstruktur breitbandig funktionieren soll.

Es bezeichne $Z_2$ die Impedanz, die transformiert werden soll (ohne Anpassung) und $Z_1$ die Impedanz, an die angepasst werden soll (gewünschter Anschlusswert). Bei einstufiger Transformation gilt für die Impedanz $Z_T$ des ein Viertel der Wellenlänge langen Transformationswellenleiters

$$Z_T = \sqrt{Z_1 \cdot Z_2} = \sqrt{50\,\Omega \cdot 120\,\Omega} \approx 77\,\Omega .$$

Für die hier verwendete zweistufige und geometrisch abgestufte Transformation mit den beiden ein Viertel der Wellenlänge langen Transformationswellenleitern $Z_{T1}$ und $Z_{T2}$ gilt

$$Z_{T1} = Z_1 \sqrt[3]{\frac{Z_2}{Z_1}} = 50\,\Omega \cdot \sqrt[3]{\frac{120}{50}} \approx 66{,}9\,\Omega \quad \text{und}$$

$$Z_{T2} = Z_{T1} \sqrt[3]{\frac{Z_2}{Z_1}} = 66{,}9\,\Omega \cdot \sqrt[3]{\frac{120}{50}} \approx 89{,}6\,\Omega . \quad \text{Vgl.}$$

dazu Zinke, O.; Brunswig, H.: Lehrbuch der Hochfrequenztechnik. Berlin, Heidelberg, New York, Tokyo: 1986 (3. Aufl.), Bd. 1, S. 97.

Alternativ zu einer Anpassung der Impedanz durch die beschriebenen, stufenartigen Breitenänderungen kann der Spiralarm der Anschlussleitung in seinem Verlauf vom Zentrum der Spirale nach außen auch kontinuierlich breiter werden. Auch hierdurch kann eine Anpassung der Impedanz vorgenommen werden.

In bevorzugter Ausgestaltung weist die Antennenstruktur eine Frequenzweiche (z. B. 72 in Fig. 7) auf, die bevorzugtermaßen ebenfalls in Streifenleitertechnik auf demselben Träger aufgebracht ist, der die eigentlichen Antennen trägt. Z. B. ist der Spiralarm 77 an seinem aus Sicht des Spiralzentrums äußeren Ende an eine so gestaltete Frequenzweiche angeschlossen. Die Frequenzweiche dient dazu, Frequenzsignale, die in verschiedenen Frequenzbereichen liegen, auf zwei verschiedene oder sogar mehr als zwei verschiedene Anschlussleitungen zu verteilen. Die Anschlussleitungen sind beispielsweise jeweils durch ein Koaxialkabel 88a, 88b gebildet. Z. B. sind zwei Anschlussleitungen vorhanden und teilt die Frequenzweiche Signale im Bereich des Frequenzbandes für Bluetooth von Signalen im Bereich eines GSM-Frequenzbandes.

Die Frequenzweiche 72 wird vorzugsweise als Duplexweiche ausgestaltet, d. h. sie teilt nicht nur Frequenzen auf die Anschlussleitungen auf, die von der Antennenstruktur empfangenen Frequenzsignalen entsprechen, sondern ermöglicht auch über die Anschlussleitungen Sendesignale zuzuführen, damit diese von der Antennenstruktur ausgesendet werden. In diesem Fall vereint die Frequenzweiche die Signale, die über die verschiedenen Anschlussleitungen der Antennenstruktur zugeführt werden.

Auch kann die Frequenzweiche ausschließlich für den Sendebetrieb verwendet werden.

Alternativ zu der beschriebenen Ausgestaltung der Frequenzweiche in Streifenleitertechnik können auch handelsübliche, separate Bauelemente verwendet werden, die beispielsweise an dem Träger der Antennenstruktur befestigt werden oder die an einer anderen Halterung befestigt werden. Dabei kann die Frequenzweiche z. B. aus einer geeigneten Kombination von Bandpassfiltern aufgebaut sein.

Um Dämpfungsverluste bei der drahtlosen Übertragung der Signale zwischen der Antennenstruktur und der Mobiltelefonantenne zu kompensieren (einschließlich der Möglichkeit, eine zusätzliche Verstärkung vorzunehmen), ist vorzugsweise ein Verstärker vorgesehen, der die Signale auf ihrem Weg von der Antennenstruktur zu anderen Einrichtungen, wie beispielsweise einer Außenantenne des Kraftfahrzeugs oder zu einer Freisprecheinrichtung des Kraftfahrzeugs verstärkt. Alternativ oder zusätzlich kann ein Verstärker vorgesehen sein, der die Sendesignale auf ihrem Weg zu der Antennenstruktur verstärkt. Der oder die Verstärker sind z. B. Teil der Anordnung zur Übertragung der Antennensignale zu und/oder von der Mobiltelefonantenne. Beispielsweise sind der oder die Verstärker mechanisch mit dem Halter zum Halten und/oder Aufnehmen des Mobiltelefons verbunden. Z. B. kann der Verstärker an der Platine 3 gemäß Fig. 1 befestigt sein.

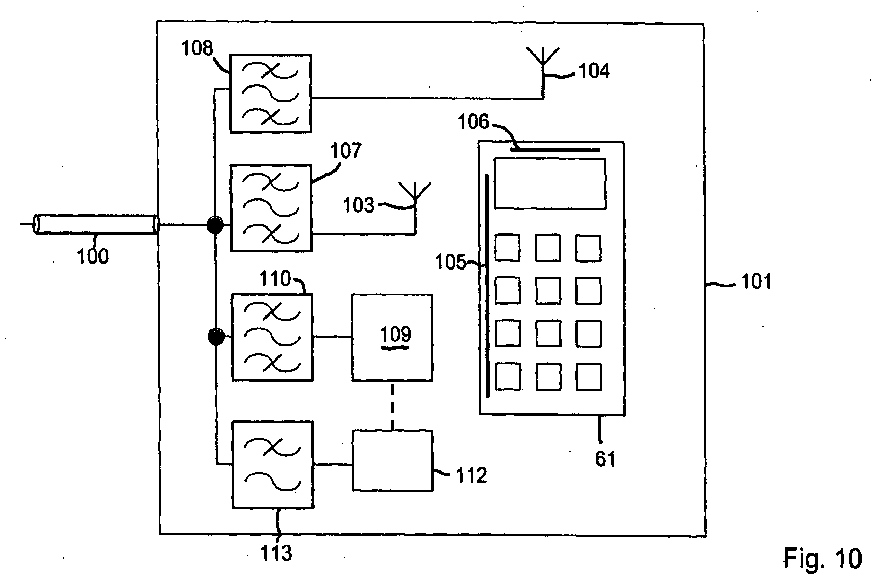

Eine spiralförmige Antennenstruktur kann auch anders als anhand von Fig. 7 beschrieben aufgebaut und elektrisch angeschlossen sein. Beispiele hierfür sind in der US 5,621,422 beschrieben. Wie dort näher ausgeführt wird, können die vorhandenen zwei Spiralarme an ihren äußeren Enden elektrisch angeschlossen werden und sind über einen so genannten 180°-Hybrid angeschlossen, der wiederum den Anschluss von Anschlussleitungen für Signale in unterschiedlichen Frequenzbändern ermöglicht (wie in der US 5,621,422 in Fig. 9 und Fig. 10 dargestellt und in der zugehörigen Beschreibung in Spalten 10 und 11 beschrieben).

Im Folgenden werden die Figuren 10 bis 12 beschrieben. Dabei bezeichnen wiederum gleiche Bezugszeichen wie in anderen Figuren gleiche oder entsprechende Komponenten. Figur 10 zeigt eine Halterung 101, die als elektromagnetisch abschirmendes Gehäuse zur Aufnahme eines Mobiltelefons 61 ausgestaltet ist. Die Halterung 101 weist eine erste Antenne 103 zur Übertragung von Signalen eines Mobilfunknetzes (z. B. GSM oder UMTS oder WLAN) zu einer ersten Mobiltelefonantenne 105 bzw. zum Empfang solcher Signale auf. Ferner ist eine zweite Antenne 104 der Halterung 101 vorgesehen, die zur Übertragung von Signalen eines Positionsbestimmungssystems (z. B. GPS) zu einer zweiten Mobiltelefonantenne 106 dient. Die erste Antenne 103 ist über ein Bandpassfilter 107 mit einer Anschlussleitung 100 der Halterung 101 verbunden, wobei die Anschlussleitung z. B. ein Koaxialkabel ist, das die Halterung 101 mit einer Außenantenne des Kraftfahrzeugs verbindet. Die zweite Antenne 104 ist über ein weiteres Bandpassfilter 108 ebenfalls mit der Anschlussleitung 100 verbunden.

Ferner weist die Halterung eine Einrichtung 109 auf, die der Ausführung von Steuerungs-, Überwachungs- und/oder Diagnosefunktionen von im Fahrzeug verbauten Einrichtungen und Komponenten dient. Ein Beispiel ist bereits beschrieben worden und betrifft die Temperaturüberwachung eines Kühlcontainers des Kraftfahrzeugs. Die Einrichtung 109 ist über einen weiteren Bandpass 110 wiederum mit der Anschlussleitung 100 verbunden.

Ferner weist die Halterung 101 eine Stromversorgungseinrichtung 112 auf, die z. B. eine wieder aufladbare Batterie mit zugehöriger Ladeelektronik sowie Anschlüsse für zu versorgende Komponenten und Einrichtungen der Halterung 101 aufweist. Diese Stromversorgungseinrichtung 112 ist über ein Tiefpassfilter 113 ebenfalls mit der Anschlussleitung 100 verbunden. Im Fall des Koaxialkabels ist daher z. B. der Zentrumsleiter des Kabels mit den Bandpassfiltern 107, 108 und 110 sowie mit dem Tiefpassfilter 113 verbunden.

Auf diese Weise kann das Mobiltelefon 61 Positionssignale des GPS empfangen und auch über die drahtlose Verbindung zu der ersten Antenne 103 Funksignale aus einem Mobilfunknetz empfangen und in dieses senden. Ferner kann über die Anschlussleitung 100 die Stromversorgung von Einrichtungen und Komponenten der Halterung 101 gewährleistet werden, z. B. der Einrichtung 109 oder etwaiger anderer Einrichtungen, die in Figur 10 nicht dargestellt sind, wie z. B. einem Signalverstärker zum Verstärken der über die Anschlussleitung 108 zu übertragenden Hochfrequenzsignale, einem Display oder beleuchteten Bedienelementen an der Halterung 101.

Bevorzugtermaßen weist die Halterung eine Einrichtung zum induktiven (drahtlosen) Laden eines Energiespeichers auf, der Teil des Mobiltelefons ist. Auch diese Ladeeinrichtung kann über eine Stromversorgung wie zuvor beschrieben mit elektrischer Energie zum Laden des Mobiltelefons versorgt werden. Unter einem induktiven Laden wird verstanden, dass Energie in Form von elektromagnetischen Wellen zu dem Mobiltelefon übertragen wird und dort z. B. von einer Spule (allgemeiner formuliert: einer Antenne) aufgenommen und in den Energiespeicher eingebracht wird.

Um auf das Ausführungsbeispiel gemäß Fig. 10 zurückzukommen, kann die Einrichtung 109 in ihrer Funktion unabhängig von dem Mobiltelefon 61 sein. Bevorzugt wird jedoch, dass die Einrichtung 109 im Fall des Eintretens bestimmter Ereignisse, wie z. B. der Feststellung, dass die Temperatur in dem Tiefkühlcontainer ansteigt, über eine weitere nicht dargestellte Antenne der Halterung 101 oder über den Signalpfad a) Bandpassfilter 110, b) Bandpassfilter 107 und c) erste Antenne 103 ein Signal zu dem Mobiltelefon 61 überträgt, welches dieses zu einer Reaktion, z. B. dem Aussenden von Signalen über das Mobilfunknetz veranlasst.

Die Antennen 103, 104 sind Teile einer örtlich verteilten Antennenstruktur der Halterung 101. Dies zeigt, dass die Antennenstruktur nicht zwingend eine bautechnische Einheit sein muss, auch wenn sie es vorzugsweise ist. Die in Fig. 10 dargestellte Antennenvariante wurde gewählt, da die beim normalen Gebrauch des Mobiltelefons 61 unter freiem Himmel einfallenden Positionssignale bzw. einfallenden und abgestrahlten Mobilfunksignale sich typischerweise aus Sicht des Mobiltelefons 61 in verschiedenen Raumwinkelbereichen ausbreiten. Die Mobiltelefonantennen 105, 106 haben daher voneinander verschiedene Richtcharakteristiken und sind in dem Mobiltelefon 61 an voneinander entfernten Stellen angeordnet.

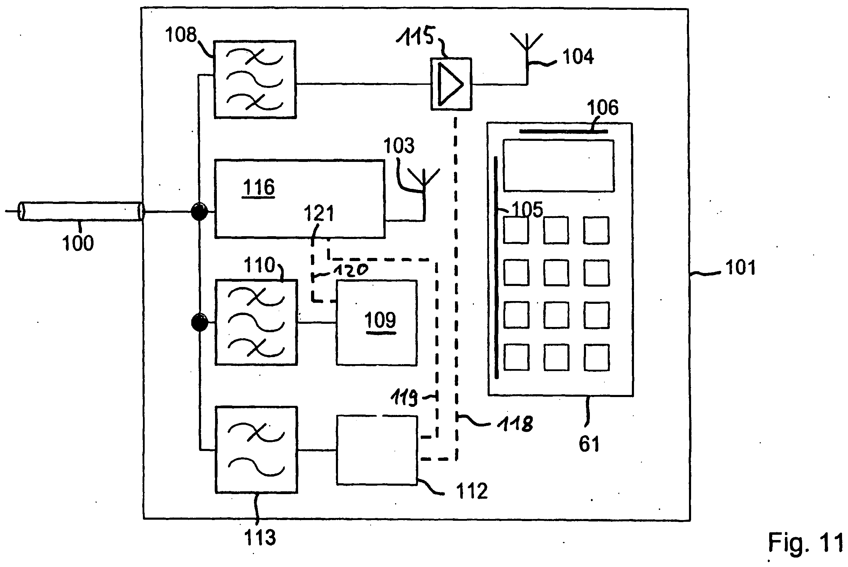

Figur 11 zeigt eine Variante der Anordnung von Figur 10, wobei jedoch Signalverstärker 115, 116 vorgesehen sind. Ein erster Verstärker 115 ist in der Verbindung zwischen dem Bandpassfilter 108 und der zweiten Antenne 104 angeordnet. Er dient der Verstärkung von Positionssignalen, die über die Anschlussleitung 100 zu dem Bandpassfilter 108 gelangen, von diesem durchgelassen werden und über die zweite Antenne 104 zu dem Mobiltelefon 61 gesendet werden sollen.

Ferner ist das Bandpassfilter 107 aus Figur 10 ersetzt durch einen Kompenser 116, der außer der Funktion der Bandpassfilterung für die Frequenzen des Mobilfunknetzes auch eine Signalverstärkung vornimmt. Dabei werden sowohl die von dem Mobiltelefon 61 über die erste Antenne 103 empfangenen Signale als auch die von der ersten Antenne 103 an das Mobiltelefon 61 zu sendenden Signale verstärkt. Ferner sind Stromversorgungsverbindungen 118, 119 und 120 dargestellt, die die Stromversorgungseinrichtung 112 mit dem Verstärker 115, dem Kompenser 116 und (über einen Hilfsausgang 121 des Kompensers 116) mit der Einrichtung 109 verbinden.

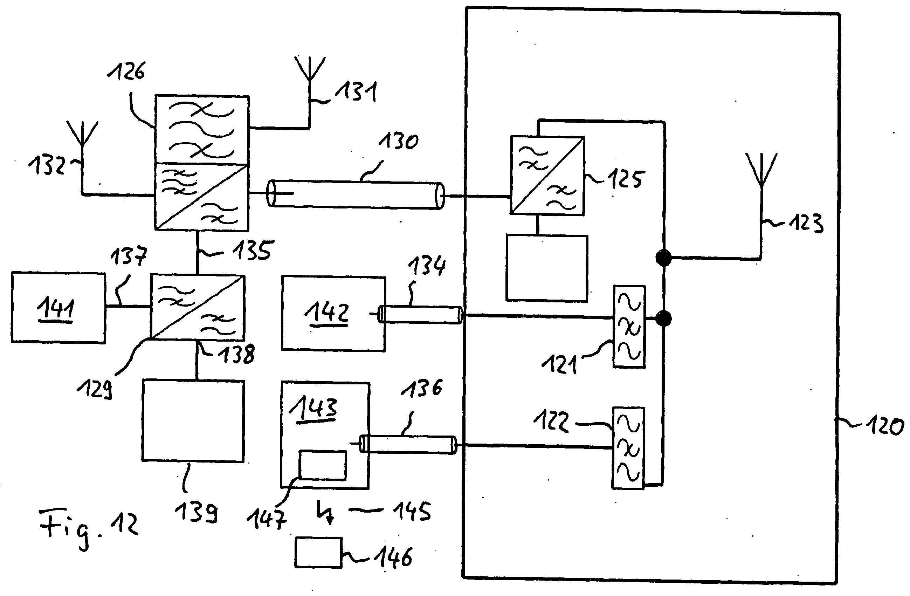

Figur 12 zeigt eine Halterung 120 zum Halten eines Mobiltelefons (nicht dargestellt). Bei der Halterung 120 kann es sich wiederum um ein elektromagnetisch nach außen abgeschirmtes Gehäuse handeln. In dieser Ausführungsform ist eine einzige Antenne 123 vorgesehen, um Funksignale zu dem Mobiltelefon zu übertragen bzw. von diesem zu empfangen. Die Antenne ist über eine Frequenzweiche 125 mit einer ersten Anschlussleitung 130 zum Anschließen der Halterung 121 an Einrichtungen des Kraftfahrzeugs verbunden. Bei diesen Einrichtungen handelt es sich im Ausführungsbeispiel um eine weitere Frequenzweiche 126, an die eine erste Außenantenne 131 zum Empfangen von Positionssignalen angeschlossen ist und an die eine zweite Außenantenne 132 für eine Funkverbindung innerhalb eines Mobilfunknetzes angeschlossen ist. Ferner ist an die Frequenzweiche 126 über eine Leitungsverbindung 135 eine weitere Frequenzweiche 129 angeschlossen, an die wiederum eine Stromversorgungseinrichtung 139 des Kraftfahrzeugs angeschlossen ist (niederfrequenter beziehungsweise Gleichspannungsanschluss 138 der Frequenzweiche 129) und an die z. B. über einen Datenbus 137 (z. B. CAN-Bus) weitere Einrichtungen des Kraftfahrzeugs angeschlossen sind, die im Beispiel pauschal mit dem Bezugszeichen 141 bezeichnet sind. Bei den Einrichtungen 141 kann es sich zum Beispiel um Steuerungs-, Überwachung- und/oder Diagnoseeinrichtungen handeln, die dem Fahrbetrieb des Kraftfahrzeugs dienen.

Die Antenne 123 der Halterung 120 ist außerdem über ein erstes Frequenzfilter 121 mit einer zweiten Anschlussleitung 134 der Halterung 120 verbunden. Über diese Anschlussleitung 134 werden zum Beispiel WLAN- oder Bluetooth-Signale zu Audio-, Video-, Multimedia-, Steuer- und/oder Telematikeinrichtungen des Kraftfahrzeugs übertragen. Dazu zählen insbesondere eine Freisprechanlage, eine Stereoanlage und/oder ein Navigationssystem. Diese Einrichtungen sind pauschal mit dem Bezugszeichen 142 bezeichnet.

Die Antenne 123 ist über ein zweites Frequenzfilter 122 mit einer dritten Anschlussleitung 136 der Halterung 120 verbunden. Über diese Anschlussleitung 136 werden zum Beispiel Signale in einem oder mehreren verschiedenen Frequenzbändern für so genannte ISM-Systeme (Industrial Scientific Medical) des Kraftfahrzeugs zu Einrichtungen übertragen, die im Beispiel pauschal mit dem Bezugszeichen 143 bezeichnet sind. Ein ISM-Frequenzband ist ein Frequenzbereich für Hochfrequenz-Sendegeräte in Industrie, Wissenschaft und Medizin, der nicht der staatlichen Regulierung unterliegt und lizenzfrei genutzt werden darf. Es müssen lediglich Auflagen bezüglich der Sendeleistung und der Störung benachbarter Frequenzbereiche eingehalten werden und die Geräte entsprechend fachkundig geprüft werden.

Bei den Einrichtungen 143 kann es sich zum Beispiel um Steuerungs-, Überwachungs- und/oder Diagnoseeinrichtungen handeln, die nicht dem Fahrbetrieb des Kraftfahrzeugs sondern Zusatzfunktionen wie Überwachung und Steuerung von Frachtcontainern oder Überwachung der Fahrtüchtigkeit des Fahrers dienen. Die Einrichtung 143 ist z. B. ein aktiver Transponder, der über eine Funkschnittstelle 145 mit einem Temperatursensor 146 in einem Kühlcontainer verbunden ist. Um die Historie der von dem Temperatursensor 146 gelieferten Temperatursignale aufzeichnen zu können, weist der Transponder 143 einen Datenspeicher 147 auf. Sobald ein Mobiltelefon von der Halterung 120 aufgenommen ist und über die Antenne 123, das Frequenzfilter 122 und die Anschlussleitung 136 an den Transponder 143 angekoppelt ist, ruft das Mobiltelefon die Historie in Form der gespeicherten Temperaturwerte ab und stellt fest, ob z. B. eine zulässige Höchsttemperatur in dem Kühlcontainer überschritten worden ist. Wenn dies der Fall ist, setzt das Mobiltelefonen über die Antenne 123, die Frequenzweiche 125, die Anschlussleitung 130, die Frequenzweiche 126 und die Außenantenne 132 automatisch eine Meldung an einen Teilnehmer des Mobilfunknetzes ab.

In entsprechender Weise kann das Mobiltelefon eine Überwachungs- und/oder Auswertungseinrichtung auch für andere ISM-Funktionen sein, die in dem Kraftfahrzeug vorhanden sind. Dies hat den Vorteil, dass es eine von Überwachung und/oder Auswertung abhängige Funkkommunikation über das Mobilfunknetz betreiben kann.

Bei den Anschlussleitungen 130, 134, 136 kann es sich z. B. um Koaxialkabel handeln.

**Patentansprüche**

1.    Anordnung zur Aufnahme eines Mobiltelefons (7) in einem Kraftfahrzeug und zur Ankopplung des Mobiltelefons (7) an Einrichtungen des Kraftfahrzeuges, insbesondere an eine Außenantenne und/oder an eine Freisprecheinrichtung des Kraftfahrzeuges, wobei die Anordnung eine Antennenstruktur (63) zum drahtlosen Übertragen von Signalen zu und/oder von einer Sende- und/oder Empfangsantenne (62) des Mobiltelefons (7) aufweist, wobei die Anordnung eine Halterung aufweist, die Bewegungsmöglichkeiten des Mobiltelefons (7) zumindest einschränkt, wobei

• die Halterung ausgestaltet ist, denselben Mobiltelefontyp innerhalb eines durch die Halterung begrenzten örtlichen Bereichs in beliebigen Haltepositionen zu halten, und ausgestaltet ist, verschiedene Mobiltelefontypen zu halten,
• die Antennenstruktur (63) derart ausgestaltet und relativ zu der Halterung angeordnet ist, dass in jeder möglichen Halteposition zwischen der oder den Antennen des gehaltenen Mobiltelefons (7) und der Antennenstruktur (63) eine drahtlose Signalübertragung stattfinden kann, und
• die Halterung einen wannenförmigen Aufnahmeraum (5) zur Aufnahme des Mobiltelefons (7) aufweist, der von einem Boden als Auflagefläche für das Mobiltelefon (7) und einer in sich geschlossen umlaufenden seitlichen Randfläche begrenzt ist.

**2.** Anordnung nach Anspruch 1, wobei die Antennenstruktur (63) sowohl der Ankopplung der Sende- und/oder Empfangsantenne eines Mobiltelefons (7) an eine Außenantenne (52) des Kraftfahrzeugs als auch der drahtlosen Ankopplung des Mobiltelefons (7) an eine Freisprecheinrichtung des Kraftfahrzeugs dient.

**3.** Anordnung nach einem der vorhergehenden Ansprüche, wobei die Antennenstruktur ausgestaltet ist, zirkular polarisierte Wellen abzustrahlen.

**4.** Anordnung nach einem der vorhergehenden Ansprüche, wobei die Antennenstruktur spiralförmige elektrisch leitfähige Bereiche (75a, 75b) aufweist.

**5.** Anordnung nach dem vorhergehenden Anspruch, wobei die Antennenstruktur einen im Zentrum der Spirale liegenden, an die spiralförmigen Bereiche (75a, 75b) angeschlossenen Speisepunkt (78) aufweist.

**6.** Anordnung nach einem der vorhergehenden Ansprüche, wobei die Halterung ein elektromagnetisch abschirmendes Gehäuse (1) aufweist, mit einer Öffnung zum Einbringen des Mobiltelefons (7) in das Gehäuse (1) und zum Herausnehmen des Mobiltelefons (7) aus dem Gehäuse (1), und wobei die Antennenstruktur in dem elektromagnetisch abschirmenden Gehäuse (1) angeordnet ist.

**7.** Anordnung nach einem der vorhergehenden Ansprüche, wobei die Halterung einen Aufnahmeraum (23) zum Aufnehmen des Mobiltelefons (7) aufweist und wobei sich die Antennenstruktur im Wesentlichen über die gesamte Länge einer Außenfläche des Aufnahmeraumes erstreckt.

## Claims

**1.** Arrangement for holding a mobile telephone (7) in a motor vehicle and for coupling the mobile telephone (7) to devices in the motor vehicle, in particular to an external antenna and/or to a hands-free device in the motor vehicle, with the arrangement having an antenna structure (63) for wire-free transmission of signals to and/or from a transmitting and/or receiving antenna (62) of the mobile telephone (7), wherein the arrangement has a holder which at least restricts the movement capabilities of the mobile telephone (7), wherein

• the holder is designed to hold the same mobile telephone type in any desired holding positions within a local area which is bounded by the holder, and is designed to hold different mobile telephone types,
• the antenna structure (63) is designed and is arranged relative to the holder such that wire-free signal transmission can take place between the antenna or antennas of the held mobile telephone (7) and the antenna structure (63) in any possible holding position, and
• the holder comprises a trough-shaped holding area (5) for holding the mobile telephone (7), which holding area (5) is bounded by a base as supporting surface for the mobile telephone (7) and an intrinsically closed, circumferential, side edge surface.

**2.** Arrangement according to Claim 1, with the antenna structure (63) being used both for coupling the transmitting and/or receiving antenna of a mobile telephone (7) to an external antenna (52) on the motor vehicle and for wire-free coupling of the mobile telephone (7) to a hands-free device in the motor vehicle.

**3.** Arrangement according to one of the preceding claims, with the antenna structure being designed to emit circular-polarized waves.

**4.** Arrangement according to one of the preceding claims, with the antenna structure having spiral electrically conductive areas (75a, 75b).

5. Arrangement according to the preceding claim, with the antenna structure having a feed point (78) which is located at the centre of the spiral and is connected to the spiral areas (75a, 75b).

6. Arrangement according to one of the preceding claims, with the holder having an electromagnetically screening housing (1), with an opening for introduction of the mobile telephone (7) into the housing (1) and for removal of the mobile telephone (7) from the housing (1), and with the antenna structure being arranged in the electromagnetically screening housing (1).

7. Arrangement according to one of the preceding claims, with the holder having a holding area (23) for holding the mobile telephone (7), and with the antenna structure extending essentially over the entire length of an outer surface of the holding area.

**Revendications**

1. Dispositif de réception d'un téléphone mobile (7) dans un véhicule automobile et de couplage du téléphone mobile (7) aux installations du véhicule, en particulier à une antenne externe et/ou à une installation mains-libres du véhicule, le dispositif comportant une structure d'antenne (63) permettant la transmission sans fil de signaux en direction et/ou en provenance d'une antenne d'émission et/ou d'une antenne de réception (62) du téléphone mobile (7), dans lequel

le dispositif comporte un support qui au moins limite les possibilités de mouvement du téléphone mobile (7),

- le support étant agencé pour maintenir le même type de téléphone mobile à l'intérieur d'un zone locale limitée par le support dans des positions de maintien quelconques, et étant agencé pour maintenir divers types de téléphones mobiles, et
- la structure d'antenne (63) étant arrangée et disposée par rapport au support d'une manière telle que, dans chaque position de maintien possible, une transmission de signal sans fil puisse avoir lieu entre la ou les antennes du téléphone mobile (7) maintenu et la structure d'antenne (63), et
- le support comporte un espace de réception en forme de cuve (5), destiné à recevoir le téléphone mobile (7), qui est limité par un fond qui sert de surface d'appui pour le téléphone mobile (7) et une surface de bordure latérale circulaire refermée sur elle-même.

2. Dispositif selon la revendication 1, dans lequel la structure d'antenne (63) sert aussi bien de couplage de l'antenne d'émission et/ou de réception d'un téléphone mobile (7) à une antenne externe (52) du véhicule que de couplage sans fil du téléphone mobile (7) à une installation mains-libres du véhicule.

3. Dispositif selon une des revendications précédentes, dans lequel la structure d'antenne est arrangée pour rayonner des ondes à polarisation circulaire.

4. Dispositif selon une des revendications précédentes, dans lequel la structure d'antenne comporte des zones conductrices de l'électricité en forme de spirale (75a, 75b).

5. Dispositif selon la revendication précédente, dans lequel la structure d'antenne comporte un point d'alimentation (78) situé au centre de la spirale et relié aux zones en forme de spirale (75a, 75b).

6. Dispositif selon une des revendications précédentes, dans lequel le support comporte un boîtier (1) procurant un blindage électromagnétique, doté d'une ouverture pour introduire le téléphone mobile (7) dans le boîtier (1) et pour retirer le téléphone mobile (7) du boîtier (1), et dans lequel la structure d'antenne est disposée dans le boîtier (1) procurant un blindage électromagnétique.

7. Dispositif selon une des revendications précédentes, dans lequel le support comporte un espace de réception (23) destiné à recevoir le téléphone mobile (7) et dans lequel la structure d'antenne s'étend sensiblement sur toute la longueur d'une surface externe de l'espace de réception.

Fig. 1

Fig. 2

Fig.3

Fig. 4

FIG. 5

FIG. 6

EP 2 011 243 B2

Fig. 7

Fig. 8

Fig. 9

EP 2 011 243 B2

Fig. 10

EP 2 011 243 B2

Fig. 11

EP 2 011 243 B2

Fig. 12

EP 2 011 243 B2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004095634 A2
- DE 10360109 A1
- WO 9913527 A1
- DE 102004033009 A1
- DE 10321429 A1
- DE 10313625 A1
- DE 10114531
- US 5621422 A

**In der Beschreibung aufgeführte Nicht-Patentliteratur**

- **ZINKE, O. ; BRUNSWIG, H.** Lehrbuch der Hochfrequenztechnik. 1986, vol. 1, 97